# EUROPEAN PATENT SPECIFICATION

(11) **EP 3 058 919 B1**
(45) Date of publication and mention of the grant of the patent: **11.07.2018**
(21) Application number: 15190854.8
(22) Date of filing: 21.10.2015
(51) Int. Cl.: A61G 3/06, B66B 9/08, B60N 2/24

(54) **TRANSPORTING APPARATUS FOR TRANSPORTING A DISABLED PERSON OR A PERSON WITH REDUCED MOBILITY**
TRANSPORTVORRICHTUNG ZUM TRANSPORTIEREN EINER BEHINDERTEN PERSON ODER EINER PERSON MIT EINGESCHRÄNKTER MOBILITÄT
DISPOSITIF DE TRANSPORT DESTINÉ À TRANSPORTER UNE PERSONNE HANDICAPÉE OU UNE PERSONNE À MOBILITÉ RÉDUITE

(30) Priority: 22.10.2014 IT MO20140300; 22.10.2014 IT MO20140301; 22.10.2014 IT MO20140302
(43) Date of publication of application: 24.08.2016
(73) Proprietor: Zaccaro, Alberto, 42123 Rivalta (Reggio Emilia) (IT); Saccani, Davide, 42015 Correggio (Reggio Emilia) (IT); Cirruto, Gianni, 42015 Correggio (Reggio Emilia) (IT)
(72) Inventor: Zaccaro, Alberto, 42123 Rivalta (Reggio Emilia) (IT); Saccani, Davide, 42015 Correggio (Reggio Emilia) (IT); Cirruto, Gianni, 42015 Correggio (Reggio Emilia) (IT)
(74) Representative: Savini, Stefania

(56) References cited:
- AT-U1- 9 264
- US-A- 4 564 086
- US-A- 5 193 650

## Description

The invention relates to a transporting apparatus for transporting a disabled person or a person with reduced mobility, in particular a transporting apparatus that enables a transporting vehicle, such as motor coach, to be entered and exited easily by persons who experience walking problems.

In order to enable disabled persons to be transported on board a transporting vehicle, from Italian patent IT1347338 in the name of SACCANI Davide and ZACCARO Alberto, a loading device is known for loading disabled persons on board a transporting vehicle comprising removing means arranged for removing a disabled person on a wheelchair and moving the wheelchair from a street plane to a loading plane of the transporting vehicle, and on the other hand, the removing means comprising a loading ramp provided with a transporting carriage for transporting the wheelchair in which the disabled person is located and fixing means suitable for fixing the loading ramp to the loading plane of the transporting vehicle. A similar transporting apparatus is known from AT009264U. With reference to Figures 1A and 2A, the fixing means 300 comprises a first part 300' arranged for being fixed to a step of an access space of the transporting vehicle, for example a stairwell of a motor coach, and a second part 300" arranged for being fixed to the loading ramp, these parts being connected during the fitting step by a pin 301 that is inserted into suitable openings 302, 303, 304 of the first part 300' and of the second part 300" to enable the first part 300' and the second part 300" to be coupled with one another. The first part 300' of the fixing means 300 comprises position adjusting means that is suitable for adjusting the position of the fixing means 300 on a step of an access space to a transporting vehicle. The position adjusting means comprises a pair of squares 305, each provided with through holes 305', that is suitable for abutting on respective side walls of the access space and thus positioning a square plate 306 on the step.

The position adjusting means further comprises a plate with the right-angled ends 307 that is suitable for adjusting the fixing position of the fixing means 300 against a side riser 308 of the passenger space of the vehicle and on a supporting plane 309 of the transporting vehicle to which the seats are fixed that support the passengers during the movement of the transporting vehicle. On the plate with the right-angled ends 307, through slots 307' are obtained that enable the fixing means 300 to be adapted to the step on the basis of the distance between one edge of the seat supporting plane and the edge of the step on which the fixing means 300 is fixed so that a side portion of the plate with the right-angled ends 307 abuts on a portion of the side riser 308.

The square plate 306 has an L-shaped profile, the right angle of which is positioned during fitting near the corner of the step, so that one side of the two sides of the L is in contact with the riser of the step and the other side of the two sides of the L is in contact with the tread of the step.

In particular, the adjustment made by the adjusting means occurs by moving the plate with the right-angled ends 307 with respect to the first part 300' along a direction that is substantially parallel to the longitudinal extent of the through slots 307' and fixing the plate with the right-angled ends 307 to the square plate 306 by a plurality of screws that each engage a through slot 307' of the plate with the right-angled ends 307 and holes of the square plate 306, reciprocally.

The position adjusting means lastly comprises a further plate 310, on which through openings 310' are obtained, suitable for adjusting the height of a rotation pin coinciding with the pin 301 of the second part 300" that is fixed to the loading ramp.

One drawback of the loading device for loading disabled persons on board a transporting vehicle, in particular a motor coach, known from the prior art is that it cannot be applied to all types of transporting vehicle because of the different geometry and dimensions of the access spaces of different transporting vehicles. In other words, it is not very versatile.

In fact, each square 305 and the plate with the right-angled ends 307 of the position adjusting means entail assembly difficulties when the side wall of the access space and the side riser 308 of the passenger space are not arranged at a substantially right angle, i.e. when the bottom corner of the side riser 308 is not aligned on the corner of the last step and the distance therebetween is not covered by the length of the slots of the abutting elements. It is possible that each square 305 and the plate with the right-angled ends 307 will be unable to abut thereupon, lessening the positioning stability of the fixing means 300. In addition, also fitting time is prolonged.

Alternatively, it is necessary to provide a loading device for each type of access space to a motor coach, with a consequent difficulty for hirers provided with several motor coaches to manage the different loading devices.

Another drawback of the loading device for loading disabled persons on board a transporting vehicle, in particular a motor coach, known from the prior art is that, in order to be able to ensure that it is possible to adapt to the access spaces of different motor coaches, the adjusting slots 307' of the plate with right-angled ends 307 have to have a significant extent, with a consequent significant dimension of the plate with the right-angled ends 307 in order to enable the loading device for loading disabled persons on board a transporting vehicle to be adapted to access spaces that have differing geometry. That entails that the loading device for loading disabled persons on board a transporting vehicle occupies a significant extent of an aisle of the vehicle which is accessed from a last step of the stairs of the access space, on which it is possible to install the person loading device.

Still another drawback is that the loading device for loading disabled persons on board a transporting vehicle known from the prior art enables only a disabled person in a wheelchair to be loaded.

An object of the invention is to improve loading apparatuses for loading disabled persons or persons with reduced mobility on board a transporting vehicle of known type.

Another object is to make a transporting apparatus for transporting a disabled person or a person with reduced mobility that is versatile, i.e. can be fitted to different access spaces associated with different transporting vehicles.

A further object is to produce a transporting apparatus for transporting a disabled person or a person with reduced mobility that does not take up significant space.

Still another object is to make a transporting apparatus for transporting a disabled person or a person with reduced mobility that is easy to fit in an access space foraccessing to a transporting vehicle.

A further object is to produce a transporting apparatus for transporting a disabled person or a person with reduced mobility that is easy and cheap to make.

According to the invention, a transporting apparatus is provided for transporting a disabled person or a person with reduced mobility according to what has been stated in the claims.

Owing to the transporting apparatus for transporting a disabled person or a person with reduced mobility according to the invention, it is no longer necessary to transport a disabled person on board a motor coach only in a wheelchair but it is the apparatus itself that enables the person to be supported by a suitable seat that is completely similar in terms of dimensions to a normal seat of the motor coach. This enables the loss of additional seats to be avoided for each disabled person or person with reduced ability brought on board the motor coach because the space that each wheelchair would occupy is equal to three or four seats, as each disabled person or person with reduced ability brought on board the motor coach occupies only one seat each of dimensions that are the same as those of standard motor coach seats.

The invention is defined according to claim 1 and can be better understood and implemented with reference to the enclosed drawings, which illustrate some embodiments thereof by way of non-limiting example in which:
Figure 1 is a side view of a transporting apparatus for transporting a disabled person or a person with reduced mobility according to the invention fitted to stairs of an access space of a transporting vehicle, in different positions during a descent procedure from the transporting vehicle;
Figure 2 is a perspective view of fixing means of the transporting apparatus according to the invention in an operating configuration, i.e. fitted to a step of stairs of the access space of a transporting vehicle;
Figure 3 is a plan view of the fixing means in the operating configuration of Figure 2;
Figure 3a is a plan view of the fixing means of Figure 2 in a disengagement configuration;
Figure 4 is a frontal view of the fixing means of Figure 2;
Figure 5 is a side view of the fixing means of Figure 2 and of a hooking pin for hooking to a loading ramp;
Figure 6 is a plan view of a version of the fixing means of Figures 2 to 5;
Figure 7 is a plan view like that of Figure 6 wherein arm means of the fixing means is illustrated in a different position;
Figure 8 is a frontal view of the fixing means of Figure 6 in a dismantled position and in an assembled position;
Figure 9 is a perspective view of the version of the fixing means of the transporting apparatus according to the invention in an operating configuration, i.e. fitted to a step of stairs of the access space of a transporting vehicle;
Figure 10 is a plan view of an interface plate between a carriage and a supporting device fitted to a loading ramp hooked to the fixing means according to the invention;
Figure 11 is a plan view of an upper face of the carriage mentioned above;
Figures 12-17 illustrate a fitting sequence of the interface plate of Figure 10 on the upper face of the carriage of Figure 11;
Figure 12a is a view of an enlarged detail of Figure 12;
Figure 18 is a side view of a seat that is hookable to the interface plate of Figure 10;
Figure 19 is a side view of a hooking device arranged for hooking the seat of Figure 18 to the interface plate of Figure 10;
Figure 20 is a rear view of the seat of Figure 18 fitted to the hooking device of Figure 19;
Figure 21 is a plan view of a supporting base of the seat of Figure 18;
Figure 22 is a side view of the seat of Figure 18 fitted to a frame of the transporting vehicle;
Figures 23a and 23b 3 are plan views of a first locking element of the seat of Figure 18 in a locked position and an unlocked position respectively;
Figure 24a is a plan view of a second locking element of the seat of Figure 18;
Figures 24b and 24c are frontal views of the second locking element of Figure 24a in a fixing position and in a release position, respectively;
Figure 25a is a plan view of a further locking element of a frame of the transporting vehicle;
Figures 25b and 25c are frontal views of the further locking element of Figure 25a in an insertion position and in a disinsertion position, respectively;
Figures 26a to 26d are top views of a first sequence of a descent procedure of the seat of Figure 18 from the transporting vehicle;
Figures 27a to 27d are frontal views of the first sequence of a descent procedure of the seat of Figure 18 from the transporting vehicle;
Figures 28a to 28c are side views of a coupling sequence of the seat of Figure 18 with the transporting apparatus according to the invention;
Figure 29 is a top view of a transporting carriage on the ground of the seat of Figure 18;
Figure 30 is a frontal view of the transporting carriage of Figure 29;
Figure 31 is a side view of the transporting carriage of Figure 29;
Figures 32 to 37 are side views of a coupling and transferring sequence of the seat of Figure 18 from the transporting apparatus according to the invention to the transporting carriage of Figure 29;
Figure 38 is a frontal view of a saddle that is hookable to the interface plate of Figure 10;
Figures 39 to 42 are side views of a ascent procedure of the saddle of Figure 38 to the transporting vehicle;
Figure 39a is an enlarged detail of Figure 39;
Figure 43 is a side view of a platform that is hookable to the interface plate of Figure 10 arranged for ascending to the transporting vehicle;
Figure 43a is an enlarged detail of Figure 43;
Figure 44 is a side view of the platform of Figure 43 arranged for descending to the ground;
Figure 45 is a frontal view of a transferring carriage for transferring on board the transporting vehicle interposed between the supporting device of Figure 19 and a frame of the transporting vehicle;
Figure 46 is a plan view of a portion of the inside of the transporting vehicle;
Figure 47 is a top view of the transferring carriage of Figure 45;
Figure 48 is a side view of the transferring carriage of Figure 45;
Figure 49 is a frontal view of the transferring carriage of Figure 45;
Figures 50a to 50d are top views of a first sequence of a descent procedure of the seat of Figure 18 from the transporting vehicle using the transferring carriage of Figure 45.

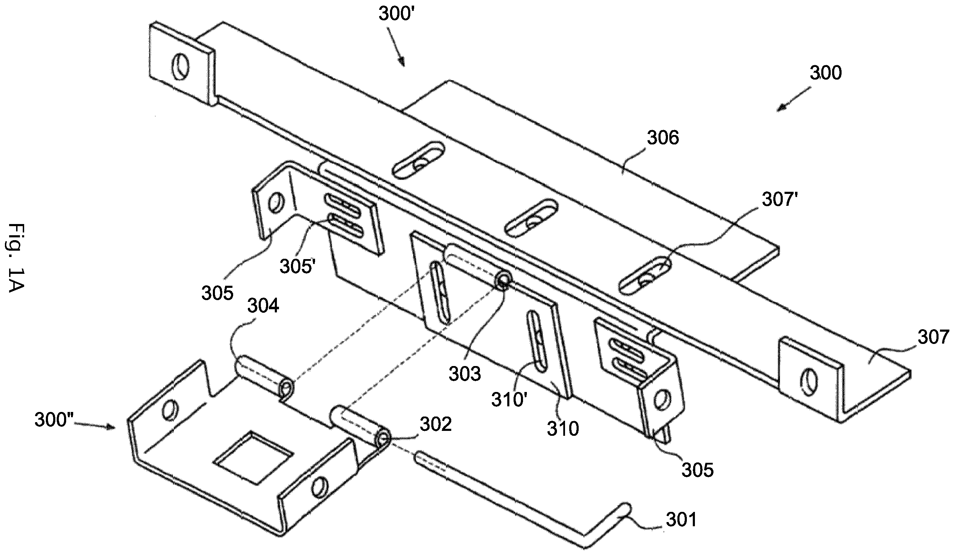

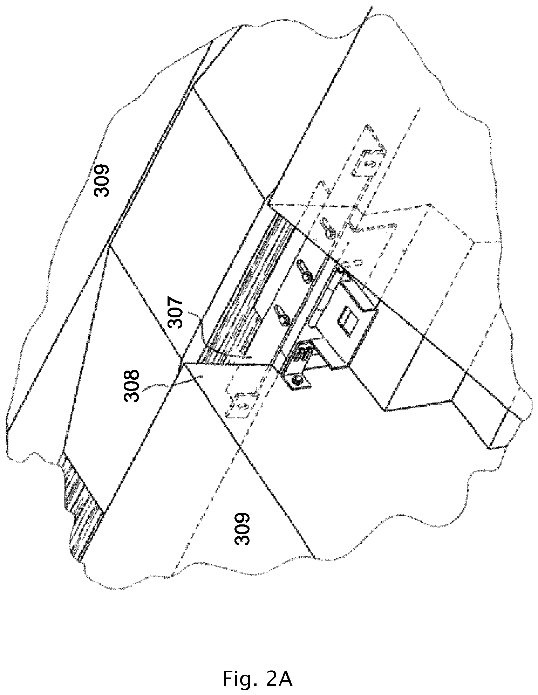

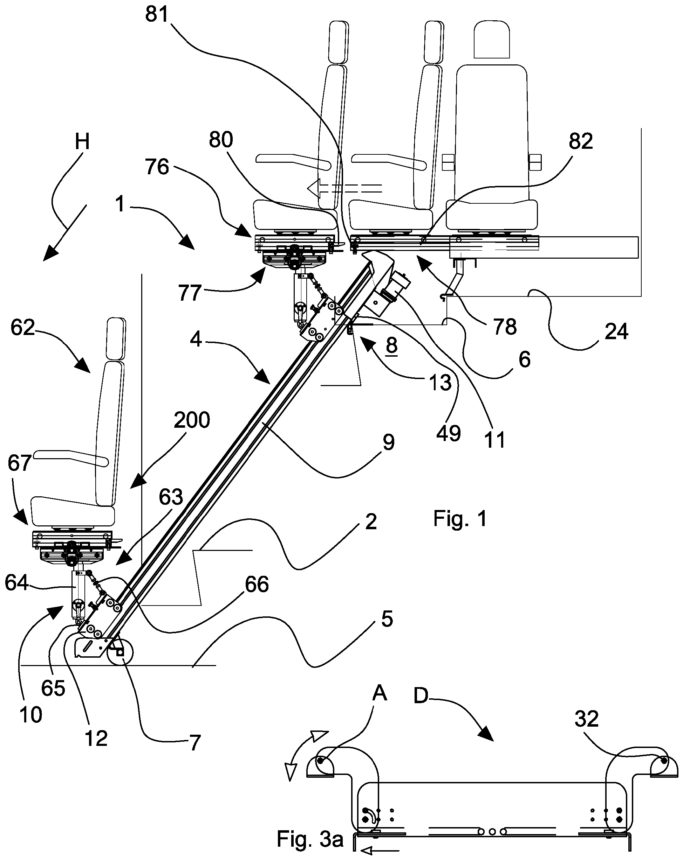

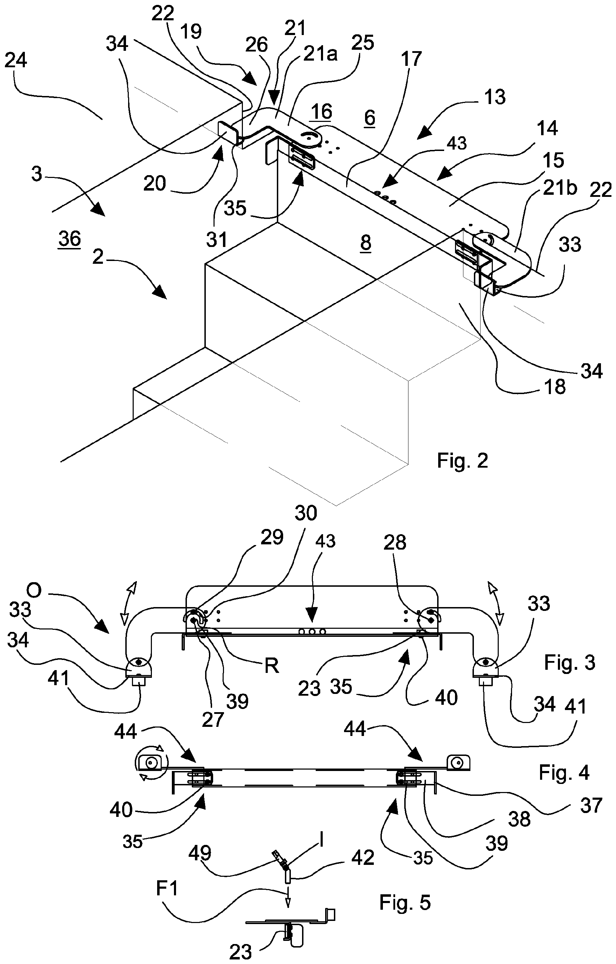

With reference to Figure 1, there is shown a transporting apparatus 1 for transporting a disabled person or a person with reduced mobility fitted to stairs 2, which are partially shown in Figure 1, provided in an access space 3, illustrated in particular in Figure 2, of a transporting vehicle, in different positions during a procedure of descent from the transporting vehicle.

The transporting apparatus 1 comprises removing means 4 arranged for enabling a disabled person or a person with reduced mobility to overcome a difference in level between ground 5, for example a street level, and an access zone 6 of a transporting vehicle, for example, an aisle of a motor coach, and vice versa. The removing means 4 comprises a loading ramp 9 connected in use, in particular rested, at a first part thereof on the ground 5 by, for example, one or more wheels 7 and, at a second part thereof, on a step 8 of the stairs 2. The wheel 7 ensures the adaptation of the loading ramp 9 to different heights to which a tread 16 of the step 8 of different transport vehicles is arranged, which heights are translated into corresponding different tilts of the loading ramp 9 when the latter is fitted to the step 8. The axle of the wheel 7 has to remain always substantially parallel to the ground 5.

The wheel 7 can be connected to a tilting axle, not shown in the Figures, arranged for ensuring an effective rest to the one or more wheels 7 on the ground 5 even when the latter has a different tilt from the plane on which the transporting vehicle rests.

The removing means 4 further comprises a dragging carriage 12, connected to the loading ramp 9, by a plurality of bearings, which are not illustrated in Figures, of rolling or sliding type. The dragging carriage 12 is slid along the loading ramp 9 by a raising/lowering system.

The raising/lowering system comprises a transmission member, which is not illustrated, such as for example a chain, in particular a double chain, or a toothed belt, and a drive motor 11, for example a reduction gear, arranged for moving the transmission member. The drive motor 11 can be supplied by the electricity supply of the transporting vehicle or can be provided with an independent supply.

In embodiments that are not shown, the raising/lowering system can be made of one or more cables by means of a screw/screw nut system, by means of a hydraulic or pneumatic system, or by a rack/pinion system.

Depending on the raising/lowering system, the dragging carriage 12 can be dragged by a female screw, by a cable, by a chain or by a toothed belt.

In one embodiment, the dragging carriage 12 can be coupled with the loading ramp 9 by a dragging prismatic coupling.

The transporting apparatus 1 further comprises a supporting device 200 which is installable, in use, on the dragging carriage 12 by connecting means 10. The supporting device 200 is arranged for supporting a disabled person or a person with reduced mobility who has to board or alight from the transporting vehicle, during movement of the dragging carriage 12 along the loading ramp 9, as disclosed better in the description.

The transporting apparatus 1 further comprises fixing means 13, shown in particular in Figures 2 to 5, that enables the transporting apparatus 1 to be fitted to the step 8 of the stairs 2. In particular, the fixing means 13 enables the second part of the loading ramp 9 to be fixed to the step 8.

The fixing means 13 comprises a supporting plate 14 arranged in use for being removably fitted to the step 8.

The fixing means 13 can be symmetrical with respect to an axis of symmetry of the supporting plate 14.

The supporting plate 14 can be L-shaped, having a first side 15 arranged in use substantially resting on a portion of the tread 16 of the step 8 and a second side 17 arranged in use substantially resting on a portion of a riser 18 of the step 8. In other words, the supporting plate 14 can be arranged, in use, at an edge of a step 8, i.e. at the intersection between the tread 16 and the riser 18 of the step 8.

Naturally, the supporting plate 14 can have a shape other than an L-shape, for example the angle between the first side 15 and the second side 17 can be different from 90°.

The supporting plate 14 can be fitted resting on the step 8 or can be fitted to the step 8 in a fixed manner by using connection devices that are of known type and are not illustrated in the Figures, arranged for enabling the supporting plate 14 to be fitted firmly to the step 8. For example, the connection devices can comprise screws that are inserted into suitable holes made in the first side 15 and in the portion of a tread 16 of the step 8 of the transporting vehicle, firmly connecting the supporting plate 14 to the step 8 and thus to the transporting vehicle.

In one embodiment that is not illustrated in the Figures, the fixing means 13 further comprises an L-shaped abutting element that in use is fitted to the loading ramp 9, in particular to a rear part thereof, i.e. facing the stairs 2, and is superimposed on the supporting plate 14 so that the L faces downwards, i.e. in such a manner that the sides of the L of the L-shaped abutting element are substantially parallel to the first side 15 and to the second side 17 of the supporting plate 14. In this embodiment, the removing means 4 further comprises a resting element, arranged in use between a first step of the stairs 2 that is met by the ground 5 and the loading ramp 9 to which a further rear part thereof is in particular connected, this also facing the stairs 2 in use. In particular, the resting element is fitted to the loading ramp 9 and is arranged resting on a tread of said first step in order to support the loading ramp 9. The resting element can have a trapezoidal section, wherein the greater base is arranged resting on the tread of the first step and the lesser base is connected to the loading ramp 9 by a lockable hinge.

In this case, owing to the resting element, the loading ramp 9 has a geometry that is fixed with respect to the access space 3 and at each fitting the tilt of the loading ramp 9 is maintained unvaried.

The one or more wheels 7 are used both to transport more easily the removing means 4 that do not have to be lifted by weight but can be dragged by hand between a boot of the transporting vehicle and the access space 3, and for a possible further rest on the ground 5 in order to reduce a distance between the centre of gravity of the removing means 4 and the leverage fulcrum consisting of the resting element, in particular when the one or more wheels are connected to the tilting axle provided with retracting arms for retracting the one or more wheels 7.

Owing to the L-shaped abutting element and to the resting element, the loading ramp 9 is torsionally stiffer because the L-shaped abutting element and the resting element contribute to a significant reduction in the torsional effect around the longitudinal axis of the loading ramp 9. The L-shaped abutting element permits orthogonal positioning of the loading ramp 9 with respect to the fixing means 13 thus ensuring repetitivity of the positioning of the loading ramp 9 on the stairs 2 after initial installation of the loading ramp 9, during which it is necessary to adjust the fixing means 13 and the resting element to avoid any risk of interference or contact between the moving parts and the fixed elements of the access space 3, after which the L-shaped abutting element and the resting element are locked in a set position.

When the loading ramp 9 is removed from the access space 3, the L-shaped abutting element and the resting element, if they are present, remain fitted to the loading ramp 9.

The fixing means 13 further comprises abutting means 19 arranged, in use, for abutting on zones of the access space 3 and of the access zone 6 and thus firmly anchoring the transporting apparatus 1 on the transporting vehicle. The abutting means 19 is articulated on the supporting plate 14 and is adjustable linearly and angularly so as to adapt the fixing means 13 to the different dimensions of the access spaces of different transport vehicles. In this manner, the abutting means 19 also acts as an adjustment of the transporting apparatus 1.

The abutting means 19 is movable between one operating configuration O, shown in Figure 2, and in Figure 3, that enables the fixing means 13 to be fitted to the transporting vehicle, and a disengagement configuration D, shown in Figure 3a, which enables the fixing means 13 to be dismantled from the transporting vehicle.

The abutting means 19 comprises frontal abutting means 20 and lateral abutting means 35, that act respectively as a frontal abutment and as a lateral abutment for the fixing means 13. In particular, the frontal abutting means 20 is arranged for abutting against portions of a side wall 22 of a supporting plane 24 on which some seats of the transporting vehicle are fitted, whereas the lateral abutting means 35 is arranged for abutting against walls 36 of the access space 3.

Each portion of the side wall 22 borders the access space 3, i.e. the stairs 2. The frontal abutting means 20 comprises frontal abutting arm means 21 that is rotationally movable to be driven between the operating configuration O, shown in Figure 2 and in Figure 3, which enables the frontal abutting means 20 to abut against the side wall 22, and the disengagement configuration D, shown in Figure 3a, which enables the frontal abutting means 20 to move away from the side wall 22 so as to enable the fixing means 13 to occupy as little width as possible, for example to be placed in a boot of the transporting vehicle, once removed from the step 8. The frontal abutting arm means 21 is arranged above the supporting plate 14 near respective opposite side ends 44 thereof.

The frontal abutting arm means 21 can comprise a pair of frontal abutting arms 21a, 21b, each being substantially L-shaped and protruding in a mirrored manner from opposite sides of the supporting plate 14. In particular, each frontal abutting arm 21a, 21b comprises a first branch 25 of the L connected to the supporting plate 14, and a second branch 26 of the L intended to be abutted against the side wall 22 in said operating configuration O.

The frontal abutting arm means 21 and, in particular the first branch 25 of each frontal abutting arm 21a, 21b, is connected to the supporting plate 14 by hinge means 27, for example a threaded element such as a screw 28 with a hollow button head that is inserted, for example, in a threaded hole of the supporting plate 14, which is not shown in the Figures.

Each frontal abutting arm 21a, 21b further comprises a respective slot 30, which is obtained in each first branch 25 and is for example C-shaped. The slot 30 couples with a pin 29, for example threaded, protruding from the supporting plate 14. The slot 30 is shaped as an arc and has an angular extent that is such as to limit the rotation of the frontal abutting arm means 21 around a rotation axis R, substantially coinciding with a rotation axis of the hinge means 27. In particular, the rotation to which the frontal abutting arm means 21 is subjected between the operating configuration O and the disengagement configuration D is substantially the same as the angular extent of the slots 30, i.e. substantially equal to 90° when the slots 30 extend along a fourth of the circumference. In the disengagement configuration D each first branch 25 is arranged substantially perpendicular to the side wall 22.

The hinge means 27 enables the frontal abutting arm means 21 to rotate and to be locked in a determined angular position during the fitting step compared with the position adopted in the disengagement configuration D.

The frontal abutting means 20 further comprises a pair of frontal abutting plates 31, each frontal abutting plate 31 being connected to a respective end of each second branch 25 by a connecting element 32, like, for example, a screw associated with respective threaded holes obtained in each frontal abutting plate 31 and in each second branch 25. Each frontal abutting plate 31 is rotationally movable around an oscillation axis A passing through the connecting element 32 so as to be positioned abutting against the side wall 22, after the frontal abutting arm means 21 is arranged in the operating configuration O.

Each frontal abutting plate 31 can be substantially L-shaped having a first flank 33 connected to the second branch 25 and a second flank 34 arranged for abutting against the side wall 22.

The frontal abutting means 20 can further comprise an abutting element 41, shown only in the operating configuration O of Figure 3. The abutting element 41 can be for example eccentric, connectable to each second flank 34 of the frontal abutting plate 31, to act as further lateral abutment if the geometry of the access space 3 does not allow the frontal abutting plates 31 to abut on the wall 22, i.e. when a resting surface of the second flank 34 on the side wall 22 is reduced. The side wall 22 can, for example, not provide an effective contact surface for the frontal abutting plates 31 that might consequently not rest thereupon completely. The abutting element 41 rotates eccentrically around a fixing screw thereof so as to abut against the wall 36, thus creating further stability for the abutment of the frontal abutting means 20.

With reference in particular to Figure 4, the lateral abutting means 35 comprises a pair of lateral abutting plates 37, each lateral abutting plate 37 being connected to a respective end of the second side 17 of the supporting plate 14 and protruding therefrom via a respective connecting plate 38. Each connecting plate 38 is arranged in use between the second side 17 and the riser 18 and is provided with one or more adjusting slots 39 inside which, in use, i.e. during the fitting step, at least one connecting member 40 is insertable in order to fix the connecting plate 38 to a portion of the second side 17. In particular, each connecting member 40 is inserted into a certain position inside each adjusting slot 39 and inside threaded holes obtained on a corresponding locking plate 23 in such a manner that each lateral abutting plate 37 abuts against the walls 36 of the access space 3. Each locking plate 23 is fittable between each connecting plate 38 and the tread 16. In use, each connecting plate 38 is thus clamped between each locking plate 23 and the second side 17 of the supporting plate 14 by the connecting member 40.

In this manner, owing to the adjusting slots 39, to the locking plate 23 and to the locking members 40, it is possible to adjust laterally the fixing means 13 so that they can adapt to different widths of the steps of the access spaces of different transport vehicles.

The adjusting slots 39 can have a longitudinal extent.

The connecting member 40 can comprise, for example, a screw that is insertable into each adjusting slot 39 and is associable with respective holes obtained in the second side 17 of the supporting plate 14, so as to lock together in a set position the connecting plate 38 and the supporting plate 14, once it has been screwed onto the locking plate 23.

Each lateral abutting plate 37 can be arranged substantially perpendicularly to the respective connecting plate 38 to which it is connected.

In one embodiment, each lateral abutting plate 37 and each respective connecting plate 38 are made of a single body, i.e. are a single plate having a substantially L-shaped form.

In order to connect the fixing means 13 and, in particular, the supporting plate 14 to the loading ramp 9, the latter is provided with a connecting hinge 49 connected to a hooking pin 42, shown in Figure 5. The hooking pin 42, during the step of fitting the transporting apparatus 1, is inserted into a hooking hole 43 obtained in the supporting plate 14.

In Figures 2 and 3 there are shown three hooking holes 43 obtained, in particular, in the first side 15 of the supporting plate 14. In use, the hooking pin 42 is inserted into one of the aforesaid hooking holes 43 on the basis of the geometry of the access space 3 and of the arrangement of the seats on the transporting vehicle.

The connecting hinge 49 is free to rotate around a hinge axis I that is substantially perpendicular to the plane of the Figure 5, i.e. parallel to the tread 16, such that the transporting apparatus 1 adapts to various heights at which the tread 16 of the step 8 of different transport vehicles is placed. Such different heights convert into corresponding different tilts of the loading ramp 9 with respect to the ground 5 when the latter is fitted to the step 8.

The fitting procedure for fitting the fixing means 13 to a step 8 of stairs 2 will be disclosed below.

When it is desired to fit a transporting apparatus 1 according to the invention in an access space 3, in particular provided with stairs 2, the supporting plate 14 of the fixing means 13 is arranged resting on the step 8 in such a manner that the first side 15 has a face resting on the tread 16 of the step 8 and the second side 17 has a face resting on the upper edge of the riser 18 of the step 8.

The supporting plate 14 is possibly fixed to the step 8 by the connection devices of known type.

Subsequently, the abutting means 19 is adjusted.

Each connecting plate 38 is fixed to the supporting plate 14 in such a manner that each lateral abutting plate 37 abuts against a wall 36 of the access space 3. In particular, each connecting member 40 that engages an adjusting slot 39 is fixed in such a position that the connecting plate 38 is fixed to the supporting plate 14 and by means of the respective lateral abutting plate 37 abuts against a portion of said walls 36. In this manner the lateral abutting means 35 makes a lateral abutment for the fixing means 13 to the access space 3. The frontal abutting arm means 21 is taken from the disengagement configuration D to the operating configuration O and is locked there by the hinge means 27 in such a manner that each second flank 34 of the frontal abutting plates 31 abuts against said side wall 22. The rotation of the frontal abutting arm means 21 is locked by acting on the hinge means 27, i.e. for example by tightening the screw 28 and the pin 29. In this manner, the frontal abutting means 20 makes a frontal abutment for the fixing means 13 fixing to the access space 3. If the geometry of the access zone 6 and, in particular, of the side wall 22 does not enable the second flanks 34 to abut against it with at least half the support surface, the abutting element 41 is connected for each second flank 34 and is rotated eccentrically around a fixing screw thereof so as to press on the wall 36, permitting an abutment of the frontal abutting means 20 also on the wall 36 (by the abutting element 41) in addition to the side wall 22 (by each second flank 34). The abutting element 41 can also be applied to just one frontal abutting plate 31 and not to the other.

The frontal abutting means 20 can be adjusted before the lateral abutting means 35, or vice versa.

Lastly, the loading ramp 9 can be connected to the fixing means 13 by inserting the hooking pin 42 into one of the hooking holes 43 provided in the supporting plate 14 by following the direction of the arrow F1 shown in Figure 5.

Owing to the fixing means 13, the transporting apparatus 1 can be easily fitted to different access spaces 3 associated with different transporting vehicles. In fact, the abutting means 19 articulated on the supporting plate 14 is easily adaptable to the different geometries of the aforesaid access spaces 3 by adjusting the frontal abutting arm means 21 and the lateral abutting means 35.

Further, the fixing means 13, once fitted to an access space 3, may not be able to be removed when the loading ramp 9 of the transporting apparatus 1 must not be used because it has extremely reduced overall dimensions and does not hinder and is not a danger to the transit of passengers in the access zone 6.

Lastly, the fixing means 13 is easy to make because it has non-complex mechanical adjustments, making also the transporting apparatus 1 according to the invention rather economical.

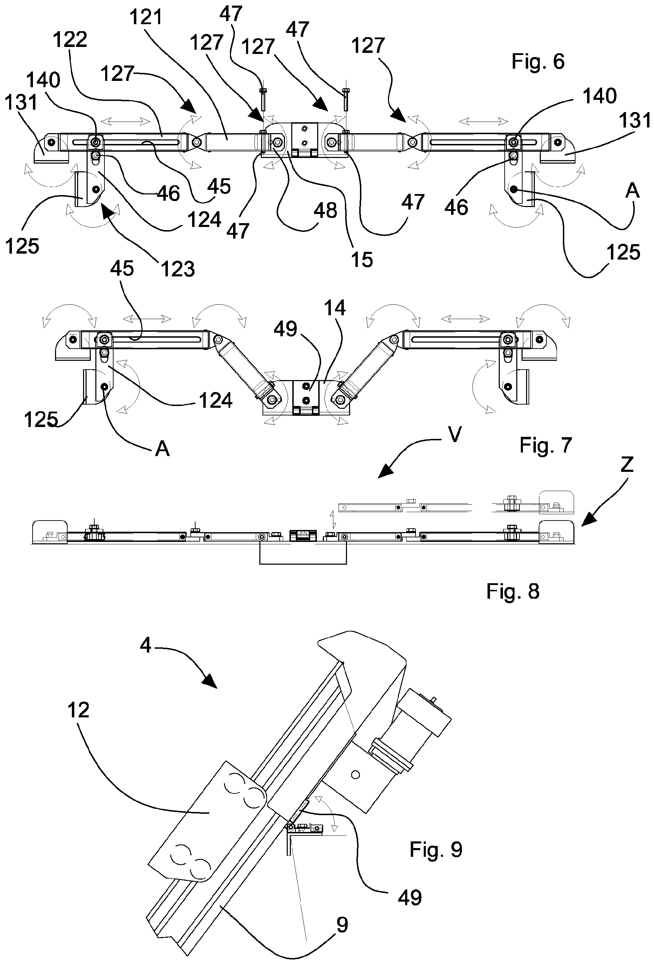

With reference to Figures 6 to 9, there is shown a version of the fixing means 13 shown in Figures 2 to 5. Identical parts to those of the fixing means 13 shown in Figures 2 to 5 will be indicated below by the same reference number and the description thereof will be not repeated but only the differences will be shown between fixing means as disclosed previously and the version thereof shown in Figures 6 to 9.

In the version of Figures 6 to 9 the frontal abutting arm means 21 of the frontal abutting means 20 comprises a plurality of articulated arms hinged together by hinge elements 127. The plurality of articulated arms can comprise a pair of first frontal abutting arms 121, a pair of second frontal abutting arms 122 hinged together at respective ends so as to permit reciprocal rotation. In particular there are provided a first frontal abutting arm 121 and a second frontal abutting arm 122 fitted to each side end 44 of the supporting plate 14.

The first frontal abutting arm 121 is further hinged on the first side 15 of the supporting plate 14 near the side end 44 of the latter. In particular, in this case the supporting plate 14 is provided with a pair of protruding elements 48 fitted by the hinge elements 127 to the side ends 44 so as to protrude outside the supporting plate 14, each protruding element 48 being connected to a respective first frontal abutting arm 121 by using a coupling pin 47. In particular, in use, when it is wished to couple the frontal abutting arm means 21 to the supporting plate 14, one end of the first frontal abutting arm 121 is inserted into an end of the protruding element 48 and each coupling pin 47 is inserted into respective through openings obtained in each first frontal abutting arm 121 and in each protruding element 48 to fix the latter together.

The second frontal abutting arm 122 has hinged, further, a frontal abutting element 131, similar to the frontal abutting plate 31.

The hinge elements 127 permits reciprocal rotation between components of the frontal abutting means 20 of the version of Figures 6 to 9, i.e. between the supporting plate 14 and the protruding element 48 and between the first frontal abutting arm 121 and the second frontal abutting arm 122.

The hinge elements 127 can comprise a plurality of threaded elements, such as screws or pins, which are insertable into respective threaded holes provided in two adjoining components of the frontal abutting means 20 to be coupled.

In the version of Figures 6 to 9, the lateral abutting means 35 comprises lateral abutting arm means 123 comprising a first lateral abutting arm 124 and a lateral abutting element 125 that are reciprocally articulated. The first lateral abutting arm 124 is connected to the frontal abutting arm means 21 and, in particular, to the second frontal abutting arm 122, whereas the lateral abutting element 125 is hinged on one end of the first lateral abutting arm 124.

The first lateral abutting arm 124 performs the same function as the connecting plate 38. The lateral abutting element 125 is completely similar to the lateral abutting plate 37 and like the latter is rotatable around an oscillation axis A as shown by the arrows in Figures 6 and 7.

Also, in the version of Figures 6 to 9, the lateral abutting means 35 is adjustable both laterally and angularly. Lateral adjustment occurs by sliding laterally a link member 140, for example a screw, that engages both each first lateral abutting arm 124 and each second frontal abutting arm 122 inside a lateral adjustment slot 45 obtained in the second frontal abutting arm 122 instead of in the connecting plate 38 as in the preceding case. Angular adjustment occurs, on the other hand, by rotating each first lateral abutting arm 124 with respect to the respective second frontal abutting arm 122, to which it is connected, by a desired angle and locking the reciprocal rotation by the link member 140 and a locking member 46.

The plurality of arms, the hinge elements 127, the lateral adjustment slot 45, the link member 140 and the locking member 46 confer more degrees of liberty for positioning the frontal abutting means 20 and the lateral abutting means 35 with respect to the embodiment illustrated in Figures 2 to 5.

In order to connect the fixing means 13 and, in particular, the supporting plate 14 to the loading ramp 9, in this case it is the supporting plate 14 and not the loading ramp 9 that is provided with the connecting hinge 49, shown in Figure 9, which remains firmly anchored to the supporting plate 14 even when the frontal abutting arm means 21 is removed to be placed for example in a boot of the transporting vehicle.

The hooking holes 43 are thus not provided in the supporting plate 14.

The fitting procedure is substantially the same as in the preceding case, the only difference is that, when the transporting apparatus 1 has to be removed from the access space 3, the connecting pins 47 are removed from the respective through openings in which they are engaged in such a manner that the fixing means 13 remains fitted to the loading ramp 9 and not to the step 8. In this manner, the access space 3 is substantially free from the encumbrance of the fixing means 13 when the use of the fixing means 13 is not required. In particular, during the first fitting of the version of the fixing means 13, the hinge elements 127, the link member 140, the locking member 46 and the connecting element 32 are loosened to enable the abutting means 19 to adopt geometries that are suitable for ensuring stable positioning of the loading ramp 9 on the access space 3. Once the abutting means 19 has been made to abut against the side wall 22 and the walls 36 of the access space 3, the hinge elements 127, the connecting member 40, the locking member 46 and the connecting element 32 are clamped. For every subsequent installation, only the coupling pins 47 will be used by coupling/uncoupling each first frontal abutting arm 121 with/from the respective protruding element 48. The operation of fitting/dismantling the frontal abutting arm means 21 occurs by moving the latter in a direction that is substantially perpendicular to the tread of the step 8, as shown in particular in Figure 8 where some of the abutting means 19 are shown in a disassembled position V, in which the abutting means 19 is not connected to the supporting plate 14, and in an assembled position Z, in which the abutting means 19 is connected to the supporting plate 14. Fitting finishes with the insertion of coupling pins 47 into the through openings. Dismantling finishes, on the other hand, with extracting of the coupling pins 47 from the through openings.

After the first installation, when the transporting apparatus 1 is not in use, the abutting means 19 is housed, for example, in the boot, with the frontal abutting arm means 21 maintained in the same configuration that they would have in the assembled configuration Z so as to facilitate subsequent fitting thereof, whereas the supporting plate 14 remains fitted to the loading ramp 9.

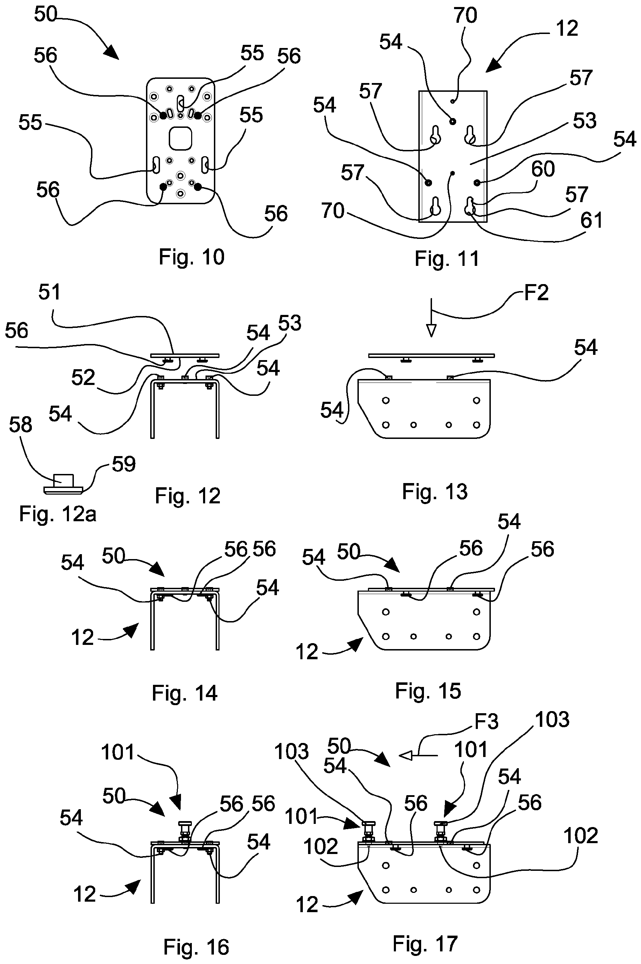

With reference to Figure 1, the dragging carriage 12, which is slidable on the loading ramp 9, is connectable, in use, to the connecting means 10 by an interface plate 50 of the transporting apparatus 1 (Figure 10).

The interface plate 50 comprises a first face 51 facing, in use, the connecting means 10 and a second face 52, opposite the first face 51, facing, in use, the dragging carriage 12.

With reference to Figure 11, the dragging carriage 12 comprises an upper face 53 facing, in use, the second face 52 of the interface plate 50.

With reference in particular to Figure 12, the dragging carriage 12 comprises a plurality of reference pins 54 that protrude from the upper face 53, each reference pin 54 being insertable into a respective through slot 55 obtained in the interface plate 50 to act as a guide during fitting of the interface plate 50 to the dragging carriage 12.

In the Figures three reference pins 54 are shown and three corresponding through slots 55, but naturally a different number of reference pins 54 and of corresponding through slots 55 can be provided. For example, two reference pins 54 and two corresponding through slots 55 can be provided.

The interface plate 50 further comprises a plurality of retaining elements 56 that protrude from the second face 52, each retaining element 56 being arranged for being inserted into a respective retaining slot 57 obtained in the upper face 53 of the dragging carriage 12 and shaped so as to retain within itself a retaining element 56. In this manner, the interface plate 50 and the dragging carriage 12 are fixed reciprocally once the interface plate 50 has been mounted on the dragging carriage 12.

In the Figures four retaining elements 56 and four corresponding retaining slots 57 are shown, but naturally a different number of retaining elements 56 and of corresponding retaining slot 57 can be provided.

Figure 12a shows an enlargement of a retaining element 56. Each retaining element 56 can have an upturned T shape, i.e. comprising a stem 58 surmounted by a cap 59 with a greater extent than the width of the stem 58.

Each retaining slot 57 can have a shape comprising a first portion 60 and a second portion 61 having a greater width than the first portion 60.

The first portion 60 has a greater width than the diameter of the stem 58, but less than the width of the cap 59. During fitting of the interface plate 50 to the dragging carriage 12, the cap 59 of the retaining element 56 is inserted into the second portion 61 of the retaining slot 57 and the retaining element 56 is slid in the retaining slot 57 until the stem 58 is inserted into the first portion 60 of the retaining slot 57, thus locking the retaining element 56.

Sliding of the reference pins 54 in the respective through slots 55 and sliding of the retaining elements 56 in the respective retaining slots 57, in particular in the respective first portions 60, can occur at the end of the stroke, which is determined by the length of the aforesaid slots.

Figures 12-17 illustrate a fitting sequence of the interface plate 50 on the upper face 53 of the dragging carriage 12.

In particular, Figures 12, 14 and 16 show frontal views of the fitting sequence of the interface plate 50 on the upper face 53 of the dragging carriage 12, whereas Figures 13, 15 and 17 show the respective side views.

With reference to Figures 12 and 13, in a first fitting step the interface plate 50 is brought near the upper face 53 of the dragging carriage 12 along a direction substantially perpendicular to the upper face 53, as indicated by the arrow F2 in Figure 13, aligning each reference pin 54 on the respective through slot 55.

With reference to Figures 14 and 15, in a second step the interface plate 50 is coupled with the dragging carriage 12 bringing the second face 52 into contact with the upper face 53, inserting each reference pin 54 inside the respective through slot 55. In this manner, it is ensured that the retaining elements 56 are inserted into the respective second portions 61 of the retaining slots 57. In fact, the retaining elements 56 and retaining slots 57 are distributed over the interface plate 50 and the dragging carriage 12, respectively, in such a manner that when each reference pin 54 is coupled with the respective through slot 55, each retaining element 56 is coupled with the respective retaining slot 57.

With reference to Figures 16 and 17, in a third step the interface plate 50 is slid on the upper face 53 in a direction substantially parallel to the upper face 53, as indicated by the arrow in Figure 17. In particular sliding occurs along the direction of maximum extent of the upper face 53. Sliding of the interface plate is such that each stem 58 is inserted into the corresponding first portion 60 of the respective retaining slot 57.

Owing to the shape of each retaining element 56 and of the respective retaining slot 57 with which it is associated, the coupling between them enables the interface plate 50 to adhere to the upper face 53 and to remain retained thereupon. Each retaining element 56 and the respective retaining slot 57 with which it is coupled thus perform a retaining function for the interface plate 50 on the dragging carriage 12.

In order to enable the interface plate 50 to be retained on the dragging carriage 12, the interface plate 50 is provided with a check device 101, illustrated in Figures 16 and 17, fitted to the interface plate 50.

The check device 101 can comprise a shutter 102 that is pressed in use by a spring, which is not illustrated, and engages in a fixing hole 70 obtained in the upper face 53. In this manner, the interface plate 50 and consequently the supporting device 200 associable therewith in use, can be firmly connected to the dragging carriage 12.

When, on the other hand, it is necessary to release the interface plate 50 from the dragging carriage 12, a driving knob 103 is driven draggingly, the driving knob 103 being provided in the check device 101 and being integral with the shutter 102, and the interface plate 50 is moved in a direction opposite that which enables the stems 58 to be inserted into the corresponding first portions 60.

In Figure 17 a check device 101 is shown that is mounted in two alternative different positions in which the check device 101 can be arranged, depending on the type of supporting device 200 to be connected to the interface plate 50.

In one embodiment not shown in the Figures, the reference pins 54 can comprise also the check device 101, so that the reference pins 54 perform both a guiding function during fitting of the interface plate 50 on the dragging carriage 12, and a clamping function of the interface plate 50 on the dragging carriage 12.

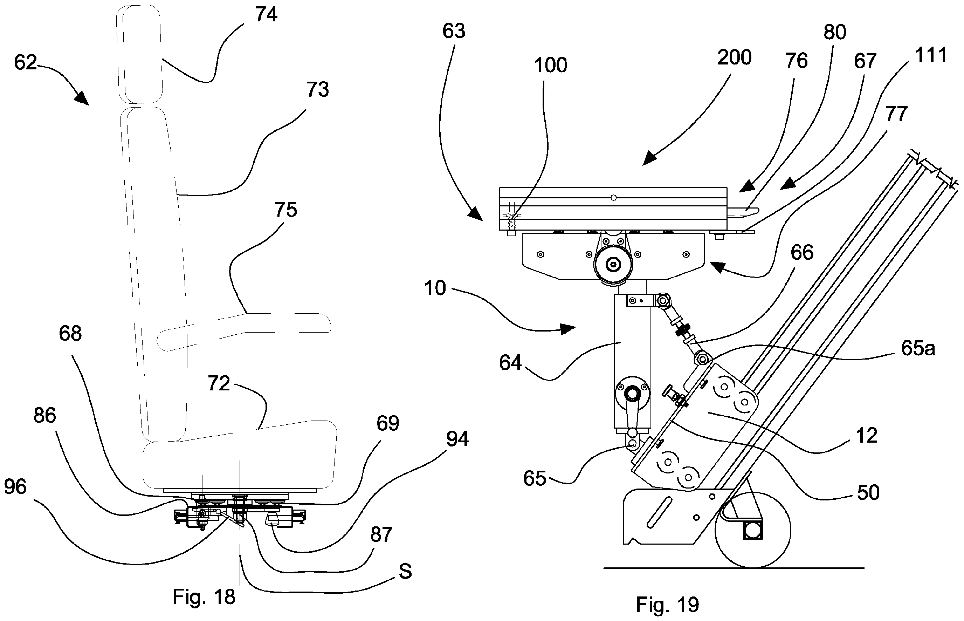

The supporting device 200 that is hookable to the interface plate 50 to support a person to be lifted or lowered along the loading ramp 9 can comprise a seat 62, shown, for example, in Figure 18 in a dismantled configuration, on which the person can sit.

The seat 62 can be a seat of the transporting vehicle that is extractable therefrom on which the disabled person or person with reduced mobility can sit who has to board or alight from the transporting vehicle, as disclosed better in the description.

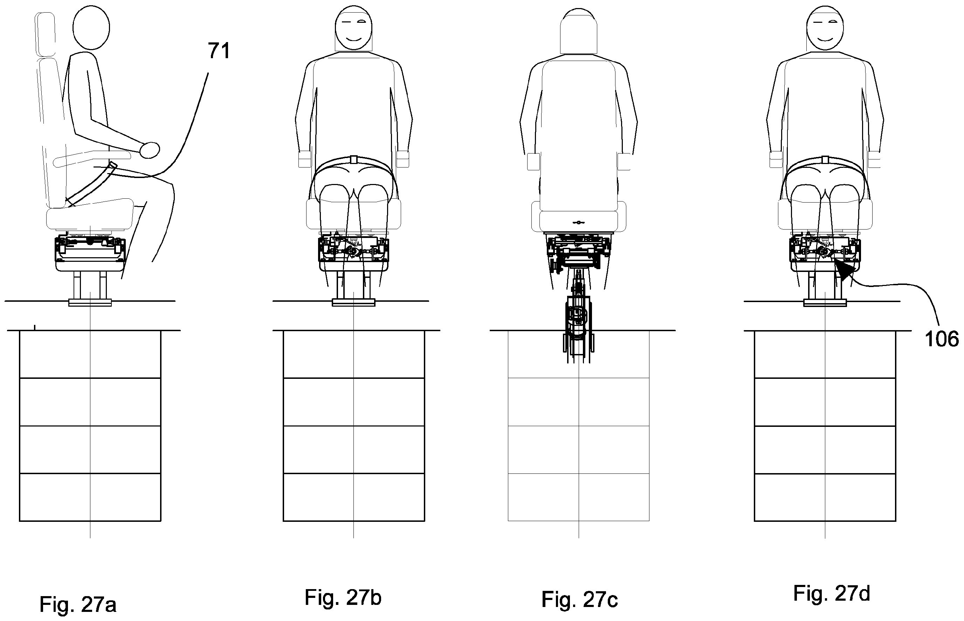

The seat 62 can comprise a seat belt 71, shown for example in Figure 27a, a sitting place 72, a back 73, a headrest 74 and at least one arm 75, preferably two arms.

The seat 62 comprises a fifth wheel 68 connected to a lower face of the sitting place 72 and provided with a plurality of ball supports 69 that enable the seat 62 to rotate around its rotation axis S passing through the centre of the fifth wheel 68. The seat 62, in fact, during a descent procedure from the transporting vehicle or an ascent for entering the transporting vehicle may have to be rotated, for example by about 90°, to face a movement direction. With reference to Figure 19, the connecting means 10 comprises a connecting device 63 arranged for connecting the seat 62 to the interface plate 50.

The connecting device 63 comprises an upright 64 that is telescopic and articulated on a fixing element 65 that is suitable for fixing the connecting device 63 to the interface plate 50.

The upright 64 is mounted substantially perpendicularly with respect to the sitting place 72.

The connecting device 63 further comprises at least one traction and adjusting element 66, for example a screw tie rod, connected on one side to the upright 64 and on the other to the interface plate 50 by a further fixing element 65a. The traction and adjusting element 66 comprises adjusting elements, such as for example screws, that, once driven, lengthen or shorten the length of the traction and adjusting element 66. In this manner it is possible to adjust the tilt of the upright 64 so that it is arranged substantially perpendicular to the ground 5 regardless of the tilt of the loading ramp 9.

Owing to the traction and adjusting element 66, by maintaining the upright 64 substantially perpendicular to the ground 5, the connecting device 63 ensures that the sitting place 72 of the seat 62 is substantially parallel to the ground 5 regardless of the tilt of the loading ramp 9, when the seat 62 is located on the connecting device 63.

The connecting device 63 further comprises a supporting structure 67 for supporting the seat 62 on which the seat 62 is positioned once removed from a frame of the transporting vehicle to be able to perform a descent or ascent of a disabled person or of a person with reduced mobility from the transporting vehicle.

The supporting structure 67 is arranged substantially perpendicular to the upright 64.

The supporting structure 67 comprises a movable frame 76 and a fixed frame 77, which are coupled together.

The movable frame 76 is arranged for bringing the connecting device 63 near a further movable frame 78 that can be provided in a frame of the transporting vehicle when the seat 62 has to be moved from the connecting device 63 to the frame of the transporting vehicle, or vice versa.

The supporting structure 67 has such dimensions and is shaped so as to be able to support the seat 62.

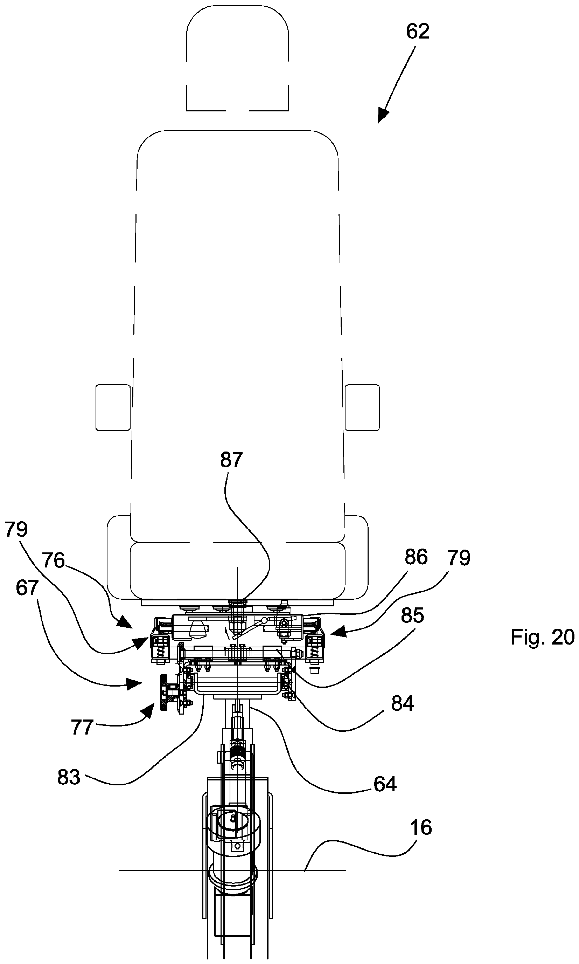

Still with reference to Figure 1, which is a side view of the seat 62 fitted to the supporting structure 67 and to Figure 20, which shows a rear view of the seat 62 fitted to the supporting structure 67 of the connecting device 63, the movable frame 76 comprises a pair of side guides 79 (Figure 20) arranged for supporting in translation and at rest the seat 62 once removed from the transporting vehicle or before being arranged on the frame of the transporting vehicle.

The movable frame 76 further comprises at least one safety stop 100 (Figure 19) arranged for locking a longitudinal movement of the seat 62 when the latter is placed on the supporting structure 67 in order to prevent a fall or a tilt of the seat 62.

One or each side guide 79 comprises a point 80 arranged for inserting in a portion of the further movable frame 78 of the transporting vehicle to lower a limit stop 81 to create a continuity between the side guides 79 and further side guides 82 of the further movable frame 78 shaped substantially like the side guides 79 of the supporting structure 67.

One or each side guide 79 further comprises a hooking element 111 rotatable around the pivot thereof, in particular on a plane substantially perpendicular to the pivot, and shaped so as to hook a stem of the limit stop 81 maintaining the aforesaid continuity between the side guides 79 and the further side guides 82.

The fixed frame 77 is arranged for supporting the movable frame 76. For this purpose, the fixed frame 77 comprises a U-shaped support 83 (Figure 20) that is fixed to the upright 64 and supports a pair of telescopic guides 84 that are in turn connected to the movable frame 76 to permit movement thereof in a longitudinal translation direction that is substantially orthogonal to the upright 64 and substantially parallel to the side guides 79 in order to bring a head of the side guides 79 near a head of the further side guides 82.

The fixed frame 77 further comprises a lateral adjusting device 85 arranged for adjusting a lateral position of the movable frame 76 by moving the latter along a lateral translation direction that is substantially orthogonal to the aforesaid longitudinal translation direction, so as to align exactly the head of the side guides 79 on the head of the further side guides 82.

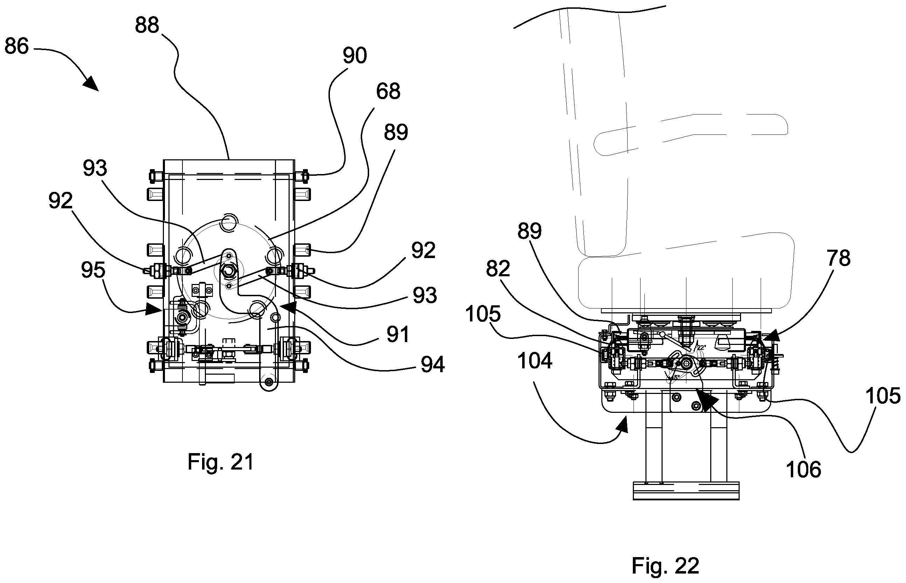

With reference to Figures 18 and 21, the seat 62 further comprises a supporting base 86 arranged for enabling the seat 62 to couple with the supporting structure 67 of the connecting device 63, with the frame of the transporting vehicle, and to be moved between the supporting structure 67 and the frame of the transporting vehicle, or vice versa.

In particular, the supporting base 86, when the seat 62 is transferred on board the transporting vehicle, is coupled with the further side guides 82 of the further movable frame 78, as shown in Figure 22, which illustrates the seat 62 fitted to the transporting vehicle and facing a forward travel direction of the transporting vehicle. When, on the other hand, the seat 62 is arranged on the connecting device 63 the supporting base 86 is coupled with the side guides 79, as shown in Figures 1 and 20.

The supporting base 86 is connected to the fifth wheel 68 and, consequently, to the sitting place 72, by a connecting pin 87.

The supporting base 86 comprises a supporting slab 88, for example having an upturned C section and a substantially rectangular plan shape.

The supporting base 86 further comprises a plurality of sliding elements 89, consisting of sliding blocks, or of rotating bearings, arranged for preventing lateral and/or upward movement of the seat 62 when the latter is slid inside further side guides 82 of the further movable frame 78 or of the side guides 79 of the movable frame 76. In other words the plurality of sliding elements 89 keeps the supporting base 86 in the guide. For this purpose, each sliding element 89 is shaped so as to be inserted into the side guides 79 and into the further side guides 82 against which it has to be coupled.

The plurality of sliding elements 89 comprises at least two sliding elements for each side of the supporting base 86 that engages with the further movable frame 78 and with the movable frame 76.

The supporting base 86 further comprises a plurality of rotating bearings 90 arranged for supporting a translation of the seat 62 longitudinally inside the side guides 79 and the further side guides 82. For example, the seat 62 is translated in a direction that is substantially perpendicular to a travel direction of the transporting vehicle, so as to move the seat 62 to the access space 3. In particular, the translation of the seat 62 can occur in a direction substantially perpendicular to the direction in which the back 73 is oriented.

The plurality of rotating bearings 90 comprises at least two rotating bearings for each side of the supporting base 86 that engages with the further movable frame 78 and with the movable frame 76.

The seat 62 further comprises a first locking element 91 arranged for locking the seat 62 with respect to the movable frame 76 or to the further movable frame 78, depending on whether the seat 62 is arranged on the supporting structure 67 of the transporting apparatus 1, or on the frame of the transporting vehicle, respectively.

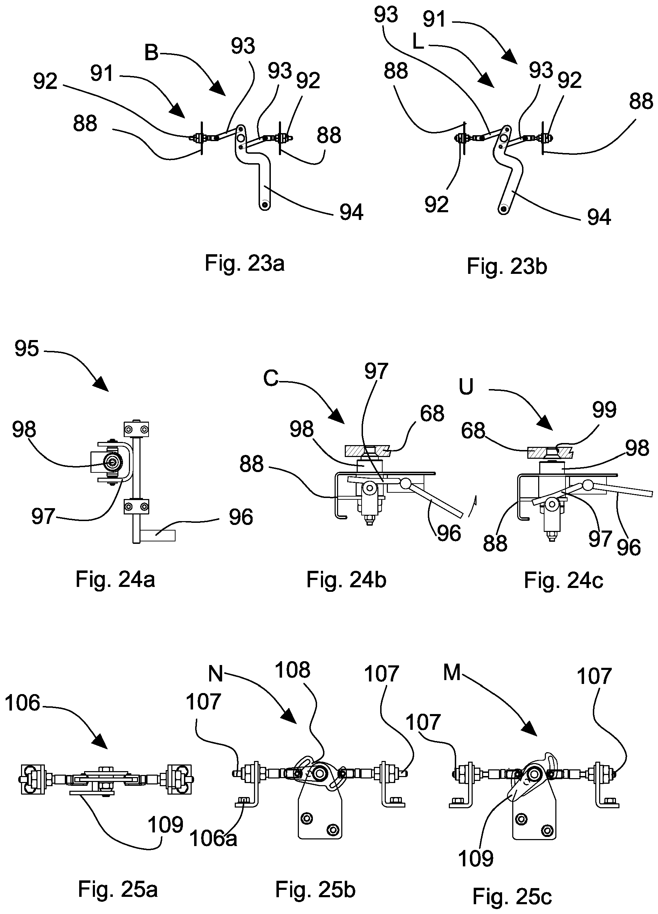

The first locking element 91 comprises two locking pins 92 driven to move between a locking position B (Figure 23a), in which the seat 62 is locked to the movable frame 76 or to the further movable frame 78, and an unlocking position L (Figure 23b), in which the seat 62 is unlocked from the movable frame 76 or from the further movable frame 78 and is consequently free to move with respect to the movable frame 76 or to the further movable frame 78, once the safety stop 100 or the limit stop 81 is lowered. The locking pins 92 are driven by respective tie rods 93 driven by a lever 94 having for example an S plan shape.

In the locking position B the two locking pins 92 are inserted into respective locking seats obtained in the movable frame 76 or in the further movable frame 78 owing to the action of springs so as to engage reciprocally the movable frame 76 or the further movable frame 78 and the seat 62.

In the unlocking position L, owing to the drive of the lever 94 and of the tie rods 93, the two locking pins 92 are moved away from the respective locking seats so as to disengage the seat 62 from the movable frame 76 or from the further movable frame 78.

Also, the seat 62 further comprises a second locking element 95 arranged for locking a rotation of the fifth wheel 68 around the rotation axis S. During travel of the transporting vehicle or during a descent/ascent on the connecting device 63, the seat 62 must not in fact rotate on its rotation axis S.

The second locking element 95 (Figure 24a) comprises a control rod 96 connected to a fork 97 arranged for moving upwards or downwards a fixing pin 98 that is connectable to the fifth wheel 68.

The second locking element 95 is in fact drivable by the rotation of the control rod 96 between a fixing position C (Figure 24b) in which the fixing pin 98 engages a fixing seat 99 obtained in the fifth wheel 68 locking a rotational movement of the fifth wheel 68 and a release position U (Figure 24c) in which the fixing pin 98 is moved away from the fixing seat 99 obtained in the fifth wheel 68 unlocking the fifth wheel 68.

To move from the fixing position C to the release position U, the control rod 96 can be rotated from the bottom to the top, vice versa, to move from the release position U to the fixing position C, the control rod 96 can be rotated from top to bottom or fixing can occur automatically through a spring thrusting element.

In one embodiment that is not illustrated, the functions of locking/unlocking the first locking element 91 and the second locking element 95 can be performed by a single locking element.

With reference to Figure 22, the frame of the transporting vehicle comprises a further fixed frame 104 arranged for supporting and hooking firmly to the transporting vehicle the seat 62. To the further fixed frame 104 the further movable frame 78 is connected by further telescopic guides 105 that permit a translation of the further movable frame 78 inside the further fixed frame 104. During this translation the further movable frame 78 can move the seat 62 locked to the side guides 79 by the locking pins 92 arranged in the locking position B. In particular, the further telescopic guides 105 are arranged for enabling the seat 62 to move in a translation direction that is substantially orthogonal to the travel direction of the transporting vehicle in order to bring the seat 62 near the transporting apparatus 1 in order to take the seat 62 from a journey position, in which the seat 62 is arranged in a fixed position on the further fixed frame 104 like a normal fixed seat of a transporting vehicle, to a removing position, in which the seat 62 is moved towards the transporting apparatus 1 to be coupled with the connecting device 63, or, vice versa, in order to move away the seat 62 from the transporting apparatus 1 in order to take the seat 62 from the removing position to the journey position.

The frame of the transporting vehicle thus acts as a further supporting structure for the seat 62 on the transporting vehicle.

With reference to Figure 22 and to Figures 25a, 25b and 25c, to the further fixed frame 104 there is fixed, by screws 106a, a further locking element 106 arranged for locking together the further movable frame 78 and the further fixed frame 104 when the seat 62 is placed on the transporting vehicle that is driven in the travel direction.

The further locking element 106 comprises two insertion pins 107 driven to move, by means of a cam 108 driven by a further lever 109, between an insertion position N (Figure 25b), in which the further movable frame 78, and thus, the seat 62 locked thereupon by the first locking element 91, is locked in translation, and a disinsertion position M (Figure 25c), in which the further movable frame 78 can be driven in translation along an orthogonal direction with respect to the forward travel direction of the transporting vehicle, in particular can be moved by means of the further telescopic guides 105 inside the further fixed frame 104 together with the seat 62 locked to the further movable frame 78 by the first locking element 91.

The rotation of the cam 108 in one direction makes the two insertion pins 107 engage respective seats obtained in the further movable frame 78 adopting the insertion position N and in the opposite direction makes the two insertion pins 107 move away from the respective seats, disconnecting the further movable frame 78 from the further fixed frame 104, adopting the disinsertion position M and thus enabling the seat 62 to be moved with the further movable frame 78.

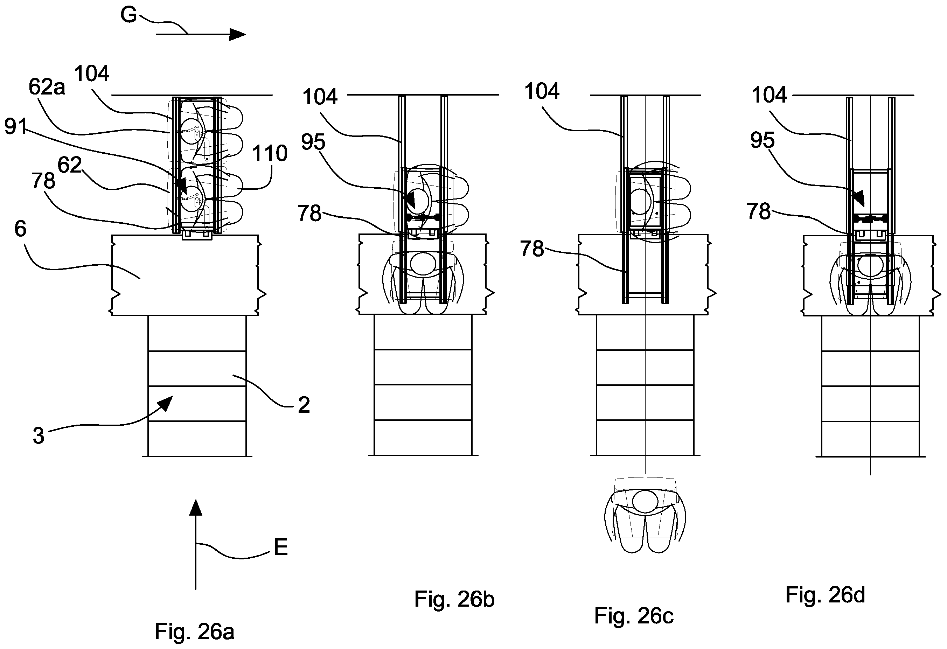

With reference to Figures 26a to 27d, a first sequence is illustrated of a descent procedure of the seat 62 from the transporting vehicle. In particular, this first sequence is relative to the steps of the descent procedure of the seat 62 that occur on board the transporting vehicle. In the Figures the seat 62 supports a person 110, for example with a severe disability, to take the person 110 to the ground 5, nevertheless there is also provided that the seat 62 is taken to the ground without a passenger to make a person 110 sit thereupon and then be transported to the access zone 6 of the transporting vehicle.

Figures 26a to 26d are top views of the first sequence of the descent procedure of the seat 62, whilst Figures 27a to 27d show the respective raised views.

Before starting a descent procedure, the seat 62, like the other seats of the transporting vehicle, is in a journey position, i.e. facing a forward travel direction G of the transporting vehicle, indicated by an arrow in Figure 26a. In particular, the seat 62 to be removed from the transporting vehicle can be placed opposite the stairs 2 in an entry direction E inside the transporting vehicle, which is also indicated by an arrow in Figure 26a. In the Figures a seat 62 and a further seat 62a that are alongside one another are illustrated but just one seat 62 can also be present.

The descent procedure comprises a first step (Figures 26b and 27b) in which the further locking element 106 is taken to the disinsertion position M to disengage the further movable frame 78 from the further fixed frame 104. In this manner, it is possible to translate the seat 62, and possibly the further seat placed alongside, extending the further telescopic guides 105 until the seat 62 is taken to the removing position, i.e. cantilevered on an aisle of the access zone 6. Subsequently, the second locking element 95 is taken to the release position U to enable the fixing pin 98 to disengage from the fifth wheel 68 in such a manner that the latter can rotate freely around the rotation axis S. In this manner it is possible to rotate the seat 62. The angle of rotation can be about 90° clockwise so as to arrange the person 110 with the face of the person facing the stairs 2, or can be about 90° anticlockwise so as to arrange the person 110 with the back of the person opposite the stairs 2.

The rotation of the fifth wheel 68 around the rotation axis S is possible only when the seat 62 is cantilevered on the access zone 6, inasmuch as it is associated with the further fixed frame 104 there are guiding profiles, which are not shown, that prevent rotation of the fifth wheel 68 during sliding of the seat 62 along the further movable frame 78.

In one embodiment the seat 62 is not rotated at all around the rotation axis S.

The descent procedure comprises a second step (Figures 26c and 27c) in which the seat 62 is moved from the further movable frame 78 of the transporting vehicle to the movable frame 76 of the transporting apparatus 1, once the connecting device 63 has been fitted to the fixing plate 50 by the fixing element and the further fixing element 65a and the tilt of the upright 64 has been adjusted by acting on the traction and adjusting element 66.

Once the seat 62 has been coupled with the connecting device 63, the seat 62 is slid to the ground 5 along the loading ramp 9 by the dragging carriage 12.

If it is necessary to lower from the transporting vehicle also the further seat 62a, subsequently there is provided to repeat the first sequence of a descent procedure of the seat 62 from the transporting vehicle (Figures 26d and 27d) to translate the further seat 62a cantilevered in the aisle and possibly rotate the further seat 62a to be ready for a transfer to the ground.

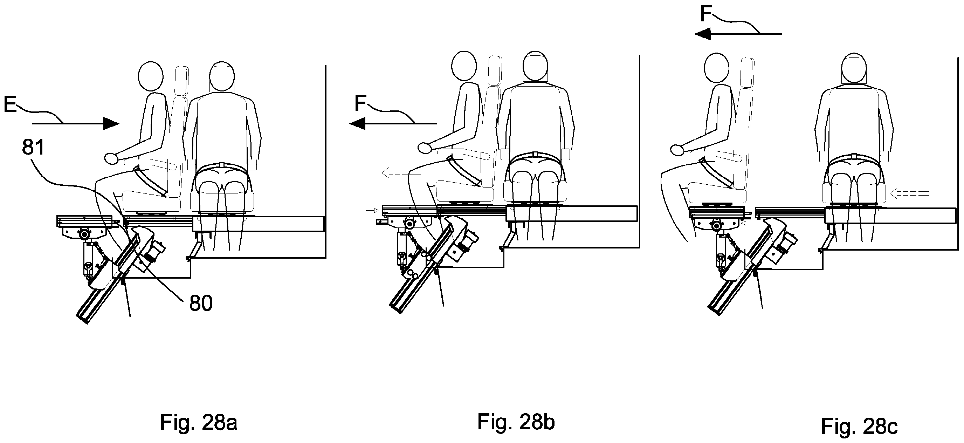

In Figures 28a-28c the second step of Figures 26c and 27c is shown in detail. In particular, it is shown how the seat 62 is moved from the transporting vehicle to the transporting apparatus 1.

Once the seat 62 has been cantilevered on the access zone 6 and the fifth wheel 68 has been possibly rotated, the first locking element 91 is taken to the unlocking position L to disengage the supporting base 86 from the further movable frame 78. In this manner it is possible to translate the seat 62 along the further side guides 82. After fitting, as disclosed previously, the transporting apparatus 1 to the step 8, the connecting device 63 is translated along the loading ramp 9 until it substantially arrives near the step 8 (Figure 28a). In this manner, the movable frame 76 of the connecting device 63 is taken near the further movable frame 78 of the transporting vehicle so as to bring a head of the side guides 79 near a further head of the further side guides 82.

The head of the side guides 79 can be brought into contact with the further head of the further side guides 82 by driving the telescopic guides 84 along the entry direction E so as to move the movable frame 76 to the seat 62 in order to create a stiff connection between the side guides 79 and the further side guides 82.

When bringing the side guides 79 near the further side guides 82 the point 80 is inserted into a portion of the further movable frame 78 to lower the limit stop 81, thus creating a continuous resting surface for the sliding elements 89 and the rotating bearings 90 of the supporting base 86 between the side guides 79 and further side guides 82 (Figure 28b) and the hooking element 111 engages in the stem of the limit stop 81 to maintain the aforesaid supporting surface.

At this point, the seat 62 is pushed along an exit direction F indicated by an arrow in Figures 28b and 28c, in an opposite direction to the entry direction E, until the locking pins 92 engage with the locking seats obtained in the movable frame 76, taking the first locking element 91 to the locking position B. This locking position B is detected by a position detecting device such as a microswitch or other device, which is not shown in the Figures. The hooking element 111 can be subsequently unhooked manually to enable the further telescopic guides 105 to retract.

Only when the locking position B is reached it is possible to translate the connecting device 63 and thus the seat 62, along a descent direction H indicated by an arrow in Figure 1, which is substantially parallel to the loading ramp 9.

When the seat 62 is taken near the ground 5, it is possible to return the first locking element 91 to the unlocking position L so as to be able to move the supporting base 86 along the side guides 79 to transfer the seat 62 to a transporting carriage 112.

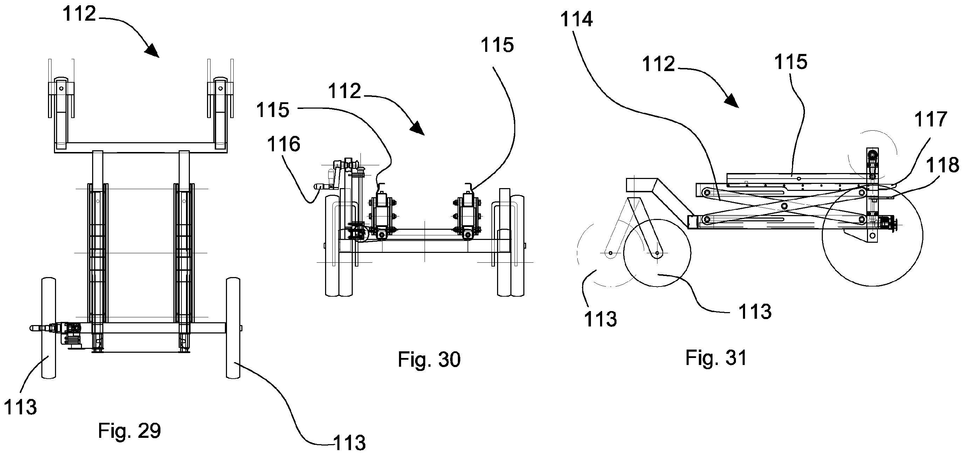

With reference to Figures 29 to 31, the transporting carriage 112 comprises a plurality of supporting wheels 113 connected to a pantograph frame 114 that enables the seat 62 to be moved to the ground 5 when it is arranged on the transporting carriage 112.

The transporting carriage 112 comprises a pair of still further side guides 115 arranged for supporting in translation and at rest the seat 62 once the seat 62 is placed on the transporting carriage 112. The still further side guides 115 of the transporting carriage 112 are substantially shaped like the side guides 79 of the supporting structure 67. In this manner it is possible to insert the supporting base 86 into the still further side guides 115 to move the seat 62 to the transporting carriage 112.

The pantograph frame 114 comprises a crank 116 that enables a height of the still further side guides 115 to be varied.

The still further side guides 115 comprise at least a further point 117 arranged for inserting in a portion of the movable frame 76 to lower the safety stop 100 to create a continuity between the side guides 79 and the still further side guides 115.

The still further side guides 115 further comprises a further hooking element 118 rotatable around the pivot thereof, in particular on a plane substantially perpendicular to the pivot, and shaped so as to hook a stem of the safety stop 100 maintaining the aforesaid continuity between the side guides 79 and the still further side guides 115.

The transporting carriage 112 can further comprise at least two centring protrusions, which are not illustrated in the Figures, each arranged for being inserted into a respective centring bush provided in the movable frame 76 but which is not illustrated in the Figures for improving the precision of the coupling between the still further side guides 115 and the side guides 79.

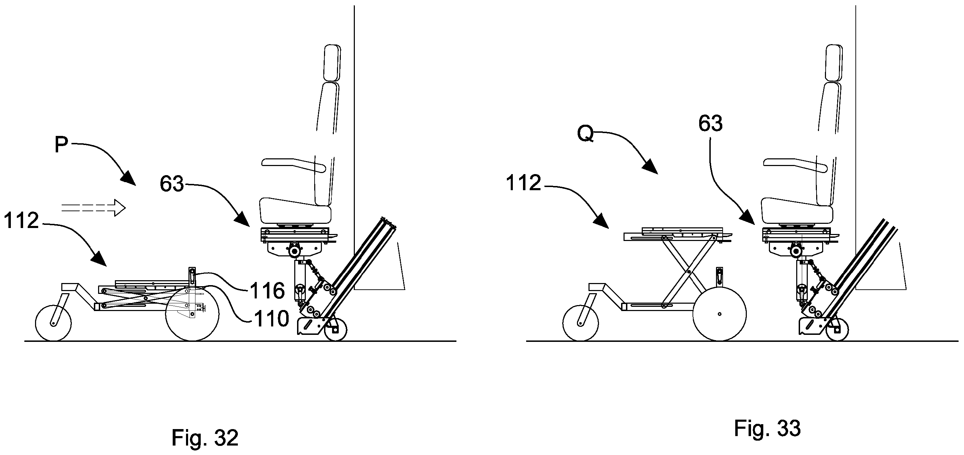

With reference to Figures 32 to 37, a coupling and transferring sequence of the seat 62 from the transporting apparatus 1 to the transporting carriage 112 is shown in detail.

The transporting carriage 112 can adopt a folded configuration P (Figure 32) in which the pantograph frame 114 has minimum overall dimensions, for example in order to be able to place the transporting carriage 112 in a boot of the transporting vehicle, and an extended configuration Q (Figure 33) in which the pantograph frame 114 has greater overall dimensions inasmuch as it is extended to take the still further side guides 115 to a height that is greater than the height that the still further side guides 115 have in the folded configuration P and substantially to a height that is the same as the side guides 79.

When the seat 62 is taken near the ground 5 by moving on the loading ramp 9, the transporting carriage 112 is moved near the connecting device 63 (Figure 32) and the pantograph frame 114 is adjusted by driving the crank 116 to take the still further side guides 115 substantially to the same height as the side guides 79.

At this point a head of the still further side guides 115 can be brought into contact with a head of the side guides 79 to bring the transporting carriage 112 nearer the connecting device 63.

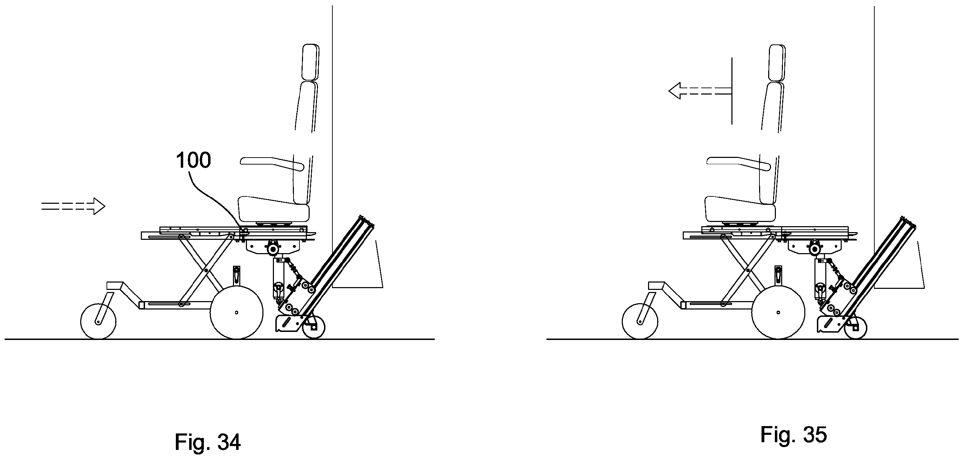

In bringing the further side guides 115 nearer the side guides 79 the further point 117 is inserted into a portion of the movable frame 76 to lower the safety stop 100 (Figure 34) creating, thus, a continuous resting surface for the sliding elements 89 and the rotating bearings 90 of the supporting base 86 between the still further side guides 115 and the side guides 79, so as to translate easily the seat 62 from the connecting device 63 to the transporting carriage 112 (Figure 35), once the lever 94 of the first locking element 91 is driven to take the latter to the unlocking position L so as to free the supporting base 86 from the movable frame 76.

The further hooking element 118 engages in the stem of the safety stop 100 to maintain the aforesaid supporting surface.

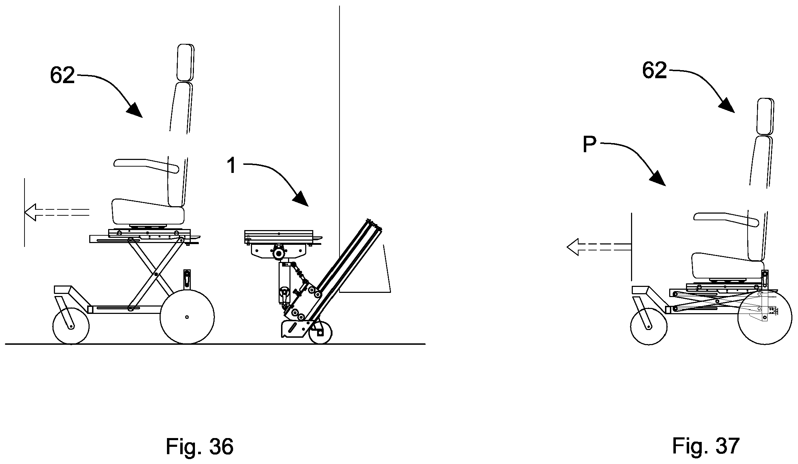

In order to remove the transporting carriage 112 from the connecting device 63 (Figure 36), the further hooking element 118 can then be released manually to enable the telescopic guides 84 to retract. Equally, also the hooking devices, if present, can be unhooked manually to enable the transporting carriage 112 to be unhooked from the connecting device 63. The pantograph frame 114 is lowered for example as far as the folded configuration P (Figure 37) and the passenger can be moved by pushing.

An ascent procedure for raising the seat 62 to the transporting vehicle occurs by substantially reversing the steps of the descent procedure and suitably driving the locking elements.

Owing to the seat 62, which is shaped like the other seats of the transporting vehicle but is removable from the transporting vehicle, it is not necessary to remove seats of the transporting vehicle to make place for a wheelchair of a disabled person because the disabled person is arranged on the seat 62, which is moved to exit the vehicle to be able to receive the disabled person and position the disabled person inside the transporting vehicle. This results in significant saving of time because operations of dismantling seats from the transporting vehicle are not required, and it does not entail reducing the number of passenger seats of the transporting vehicle to make place for one or more wheelchairs for disabled persons, as occurs in the prior art.

Further, associating with the transporting apparatus 1 a removable seat 62 does not entail any substantial structural modification to the transporting vehicle.

On board the transporting vehicle it is possible to provide for the use of a transferring carriage 212 that is couplable on one side with the frame of the transporting vehicle and on the other side with the transporting apparatus 1 according to the invention, enabling a person 110 to be transferred to the transporting apparatus 1 who is sitting on a still further seat 62b or on another seat 62c, located in a different place with respect to the seat 62 or the further seat 62a, for example in a place immediately after the seat 62 or the further seat 62a with respect to the forward travel direction G of the transporting vehicle, i.e. in a position that is not opposite the stairs 2.

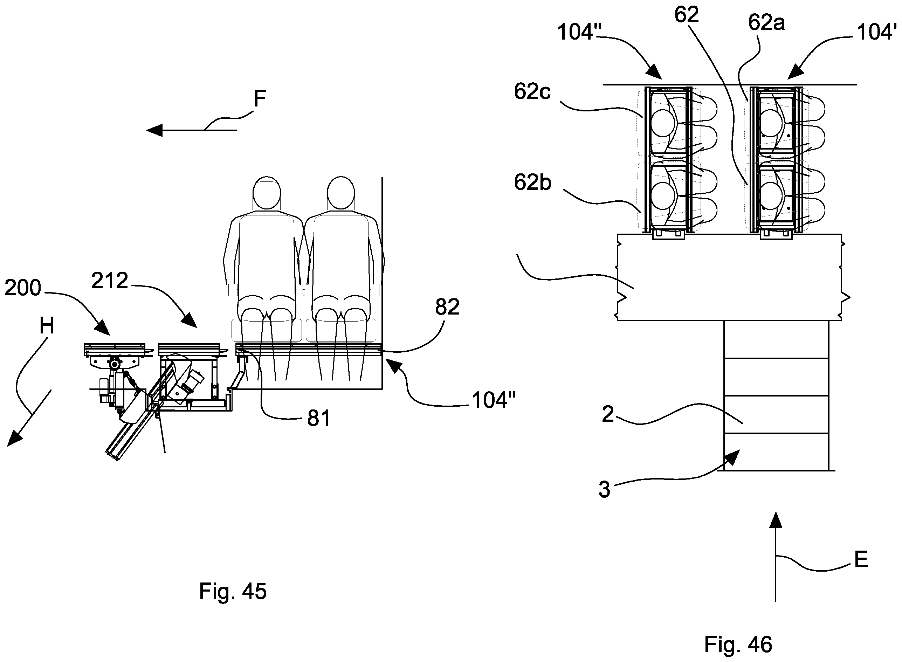

For example, the aforesaid removable seats can be positioned on the transporting vehicle as shown in Figure 46. In Figure 46, in particular, there is shown, schematically, a first pair of seats, i.e. the seat 62 and the further seat 62a, connected to a first frame 104' of the transporting vehicle and a second pair of seats 62, i.e. the still further seat 62b and the other seat 62c, connected to a second frame 104" of the transporting vehicle, this first frame 104' and second frame 104" being shaped like the frame of the transporting vehicle disclosed previously with reference to Figures 1 and 22, with the difference that the second frame 104" does not comprise the further telescopic guides 105, whereas the first frame 104' can be identical to the further fixed frame 104 or may not comprise the further telescopic guides 105. An absence of the further telescopic guides 105 means that the further side guides 82 are fixed to the further fixed frame 104 of the transporting vehicle. The transferring carriage 212 further enables a seat 62 or the further seat 62a to be transferred to the transporting apparatus 1 if the first frame 104' does not comprise the further telescopic guides 105 and thus the seat 62 or the further seat 62a cannot be cantilevered on the access zone 6.

In Figure 45 there is shown the transferring carriage 212 on board the transporting vehicle interposed between the supporting device 200 and a frame of the transporting vehicle. Similar parts to those of the frame of the transporting vehicle disclosed previously will be indicated below and in Figures 46 to 50d by the same reference number.

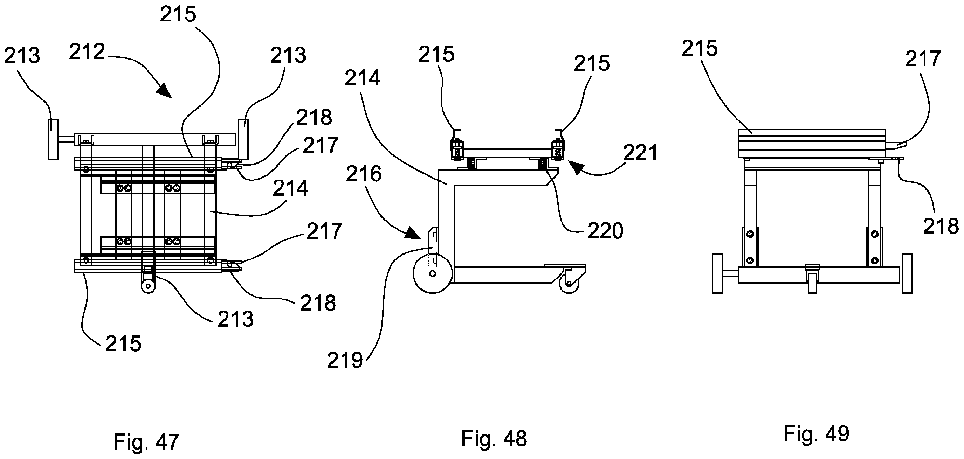

With reference to Figures 47 to 49, the transferring carriage 212 comprises a plurality of transferring wheels 213 connected to a transfer frame 214 that enables the seats 62, 62a, 62b, 62c to be moved from the frame of the transporting vehicle to the supporting structure 67, when the respective frames on which the seats are fitted are devoid of the further telescopic guides 105.

The transferring wheels 213 can be 3 in number, as illustrated in Figures 47 to 49, two arranged behind and one arranged in front according to the forward travel direction G of the transporting vehicle.

The transferring carriage 212 comprises a pair of other side guides 215 arranged for supporting in translation and at rest each of the seats 62, 62a, 62b, 62c once placed on the transferring carriage 212. The side guides 215 of the transferring carriage 212 are substantially shaped like the side guides 79 of the supporting structure 67. In this manner it is possible to insert the supporting base 86 of each seat 62, 62a, 62b, 62c into the other side guides 215 to move each of the seats 62, 62a, 62b, 62c onto the transferring carriage 212. The other side guides 215 comprise at least one still further point 217 arranged for inserting in a portion of the first frame 104' or of the second frame 104" to lower the respective limit stop 81 to create a continuity between the further side guides 82 of the first frame 104' or of the second frame 104" and the other side guides 215 of the transferring carriage 212.

The other side guides 215 further comprise at least one still further hooking element 218 rotatable around the pivot thereof, in particular on a plane substantially perpendicular to the pivot, and shaped so as to hook a stem of the limit stop 81 by maintaining the aforesaid continuity between the further side guides 82 and the other side guides 215. In Figure 47 there is illustrated a pair of still further hooking elements 218.

One height of the other side guides 215 can be adjusted by means of height adjusting means 216, according to the height of the further side guides 82.

The height adjusting means 216 is provided in the transferring frame 214 and can comprise screws and bolts that fix at different heights a pair of brackets 219 engaging in respective holes.

It is also possible to adjust the width of the transferring frame 214 according to a width of the access zone 6, for example by acting on an axle of the transferring wheels 213.

Also, it is possible for the transferring wheels 213 to be provided with respective braking elements for locking in a determined position the transferring carriage 212.

The transferring carriage 212 can further comprise a pair of other telescopic guides 220 that permit a link between the transferring frame 214 and another movable frame 221 provided in the transferring carriage 212. The other telescopic guides 220 are arranged to permit a movement of the other side guides 215 in a longitudinal translation direction which is substantially parallel to the entry direction E in the transporting vehicle in order to bring a head of the other side guides 215 near a head of the further side guides 82.

Lastly, the transferring carriage 212, can further comprise, at least two further centring protrusions provided in the transferring frame 214, which are not illustrated in the Figures, each arranged for being inserted in a respective further centring bush, that is not illustrated in the Figures, provided, for example, in the first frame 104' or in the second frame 104", to improve the precision of the coupling between the still further side guides 115 and the further side guides 82 or provided in the connecting device 63 to improve the precision of the coupling between the still further side guides 115 and the side guides 79.

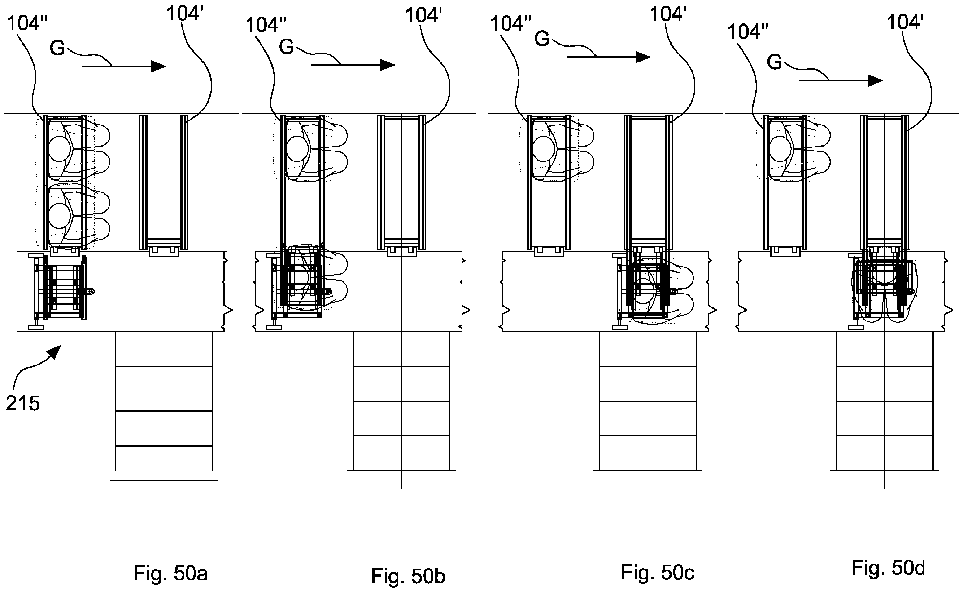

With reference to Figures 50a to 50b, a first sequence is shown in detail of a descent procedure of a seat 62, 62a, 62b, 62c from the transporting vehicle using the transferring carriage 212. In particular, this first sequence is a coupling and transferring sequence of the still further seat 62b on the transferring carriage 212 onto the transporting vehicle. The aforesaid coupling and transferring sequence substantially replaces the first sequence of the descent procedure of the seat 62 or of the further seat 62a from the transporting vehicle, disclosed previously with reference to Figures 26a and 26b.

In Figures 50a to 50d, the seat 62 and the further seat 62a are not shown because for example they were previously transferred from the first frame 104' to the ground 5 as disclosed previously with reference to Figures 26a to 28c.

When the transferring carriage 212 has to be used, for example to transfer the still further seat 62b from the transporting vehicle to the transporting apparatus 1, the transferring carriage 212 can be removed from a boot of the transporting vehicle and be arranged in the access zone 6, in particular immediately to the side of the second frame 104", so that the two transferring wheels 213 next to one another are arranged behind with respect to the single front transferring wheel 213 according to the forward travel direction G of the transporting vehicle (Figure 50a). A height and a width of the transferring carriage 212 are then adjusted according to the width of the access zone 6, in particular of an aisle thereof, and according to the height of the further side guides 82 of the second frame 104".

Subsequently, the transferring carriage 212 is coupled with the second frame 104".

The head of the other side guides 215 is brought into contact with the further head of the further side guides 82 by driving the other telescopic guides 220 along a direction that is parallel to the entry direction E, so as to move the other movable frame 221 to the still further seat 62b so as to create a stiff connection between the other side guides 215 and the further side guides 82.

When bringing the other side guides 215 to the further lateral guides 82 the still further point 217 is inserted into a portion of the second frame 104" to lower the limit stop 81, thus creating a continuous resting surface for the sliding elements 89 and the rotating bearings 90 of the supporting base 86 of the still further seat 62b between the other side guides 215 and the further side guides 82 (Figure 50b) and the further hooking element 118 engages in the stem of the limit stop 81 to maintain the aforesaid resting surface.

At this point, the braking elements can be driven, if present, and the first locking element 91 is taken to the unlocking position L to disengage the supporting base 86 from the second frame 104". In this manner it is possible to translate the still further seat 62b along the further side guides 82 and from here along the other side guides 215 when the transferring carriage 212 is coupled with the second frame 104" (Figure 50b).

It is possible for a first limit stop to be provided in the transferring carriage 212, not shown in the Figures, against which the still further seat 62b comes to abut. The still further seat 62b is then locked on the transferring carriage 212, taking the first locking element 91 to the locking position B in which it engages in the transferring frame 214.

At this point, the still further hooking elements 218 unhook, for example manually, to enable the other side guides 215 to be retracted until they reach a second limit stop provided in the transferring carriage 212, which is also not shown in the Figures.

The transferring carriage 212 is then taken immediately to the side of the first frame 104', with which it is coupled as disclosed previously with reference to the coupling between the transferring carriage 212 and the second frame 104" (Figure 50c).

Subsequently, the second locking element 95 is taken to the release position U to enable the fixing pin 98 to disengage from the fifth wheel 68 in such a manner that the latter can rotate freely around the rotation axis S. In this manner it is possible to rotate the still further seat 62b. The angle of rotation is about 90° clockwise so as to arrange the face of the person 110 to face the stairs 2 (Figure 50d).

The supporting device 200 is then made to arrive at the second part of the loading ramp 9, i.e. near the access zone 6, and couple the connecting device 63 with the transferring carriage 212.

The head of the side guides 79 can be brought into contact with the head of the other side guides 215 by driving the telescopic guides 84 along the entry direction E, so as to move the movable frame 76 to the other movable frame 221 in order to create a stiff connection also between the side guides 79 and the other side guides 215.

When bringing the side guides 79 to the other side guides 215 the point 80 is inserted into a portion of the transferring frame 214 to lower the first limit stop, thus creating a continuous resting surface for the sliding elements 89 and the rotating bearings 90 of the supporting base 86 of the still further seat 62b between the other side guides 215 and the side guides 79 and the hooking element 111 engages in the stem of the first limit stop to maintain the aforesaid supporting surface.

At this point, the first locking element 91 is taken to the unlocking position L to disengage the supporting base 86 of the transferring frame 214. In this manner it is possible to translate the still further seat 62b along the other side guides 215 and from there along the side guides 79 when the transferring carriage 212 is coupled with the connecting device 63. The still further seat 62b is pushed along the exit direction F indicated by an arrow in Figure 45, until the locking pins 92 engage with the locking seats obtained in the movable frame 76 taking the first locking element 91 to the locking position B.

Once the still further seat 62b is coupled with the connecting device 63, the still further seat 62b is slid to the ground 5 along the loading ramp 9 by the dragging carriage 12 and then possibly coupled with the transporting carriage 112 as disclosed previously.

Only when the locking position B has been reached it is possible to translate the connecting device 63 and thus, the still further seat 62b, along the descent direction H indicated by an arrow in Figure 45, which is substantially parallel to the loading ramp 9.

A descent procedure of the other seat 62c is substantially similar to that previously disclosed with reference to the still further seat 62b, except for the fact that the stroke of the other seat 62c on the second frame 104" is naturally longer because it is positioned further than the still further seat 62b with respect to the access zone 6.

Also, a descent procedure of the seat 62 or of the further seat 62a is substantially similar to that previously disclosed with reference to the still further seat 62b, except for the fact that the transferring carriage has to be coupled only with the first frame 104'.

An ascent procedure for lifting a seat 62, 62a, 62b, 62c to the transporting vehicle occurs by substantially reversing the steps of the descent procedure and suitably driving the locking elements. In the ascent procedure, the transferring carriage 212 is first coupled with the first frame 104' and, subsequently, with the second frame 104" if the still further seat 62b or the other seat 62c has to be transferred.

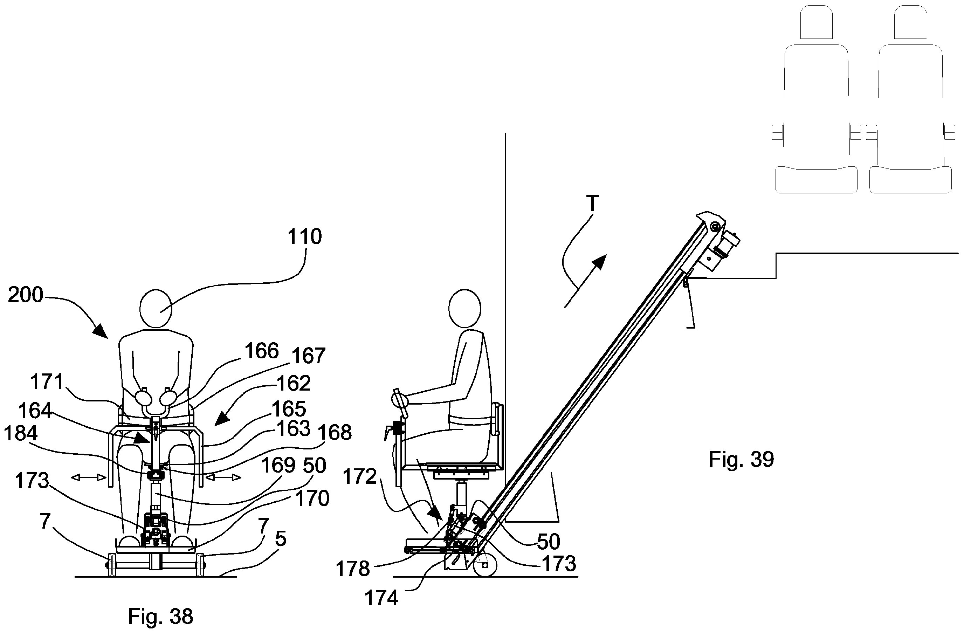

Alternatively to the seat 62, the supporting device 200 that is hookable to the interface plate 50 for supporting a person to be lifted or lowered can comprise a saddle 162, shown in Figures 38 to 42 on which a person to be transported with medium disability is arranged seated.

The saddle 162 comprises a base 163 to which a handlebar 164 is hookable that is provided with a leg guard 165, which is adjustable in width and extends in height to prevent interference with the lower limbs of the person sitting on the base 163 and with elements of the access space 3 and of the access zone 6 of the transporting vehicle.

The handlebar 164 is further provided with a grip 166 for the hands of the person to be transported, this grip 166 being for example substantially U-shaped.

The saddle 162 further comprises a back 167 on which the back of the person rests who is to be transported when sat down on the base 163. Also the back 167 is hookable to the base 163.

The handlebar 164 and the back 167 are hookable in respective hooking seats obtained on opposite sides of the base 163 by a quick release device 168, for example a spring shutter, similar to the check device 101.

The handlebar 164 and the back 167 are interchangeable in the respective hooking seats. The connecting device 63 comprises a telescopic column 169 arranged for supporting the base 163.

The column 169 is adjustable in height and is makeable by a screw and nut screw connection or a pneumatic or hydraulic or gas or mixed-action actuator. The column 169 can comprise an automatic or semiautomatic adjusting system for adjusting a height of the base 163 according to the weight of the person to be transported.

The saddle 162 further comprises a platform 170 arranged for restingly receiving the feet of a person to be transported.

Also, the saddle 162 can comprise a belt 171 hooked to the back 167.

The column 169 and the platform 170 are connected to the interface plate 50 by the connecting means 10 that comprises tilt adjusting means 172 of the saddle 162 arranged for adjusting a tilt of both the column 169 and of the platform 170. In one embodiment, the adjustments of the tilts of the column 169 and of the platform 170 are made by two distinct tilt adjusting means.

In particular, the column 169 has to be substantially perpendicular to the ground 5, whereas the platform 170 has to be substantially parallel to the ground 5 regardless of the tilt of the loading ramp 9.

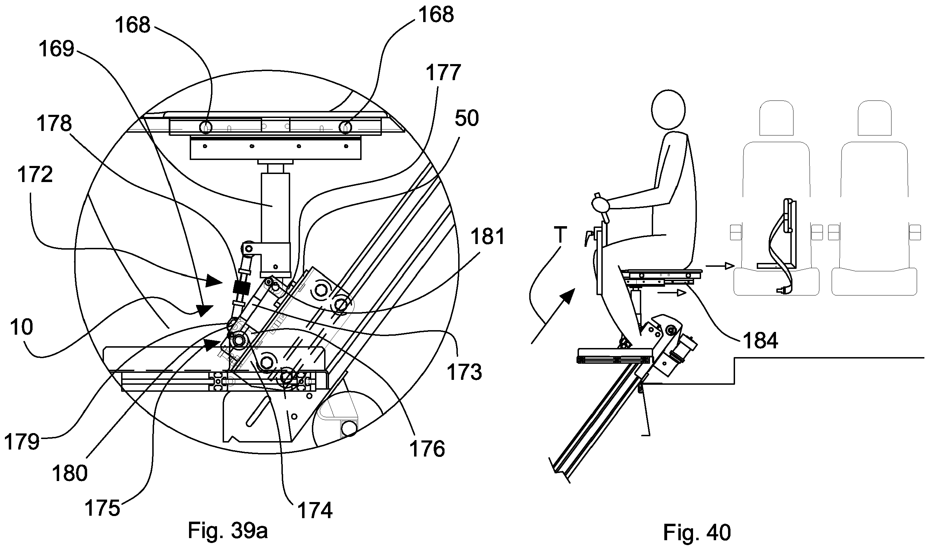

With reference in particular to Figure 39a that shows an enlarged detail of the Figure 39, the tilt adjusting means 172 comprises at least one connecting rod 173 that is connected to at least one L-shaped lever 174 fixed to the platform 170 to orient the latter.

In the Figures two connecting rods 173 are shown that are connected to as many L-shaped levers 174.

The tilt adjusting means 172 further comprises a plate 181 to which a pivot of the column 169 is fixed and on which each connecting rod 173 is hinged. The action on the tilt adjusting means 172 generates the rotation of the column 169 which, in turn, rotates the plate 181 that moves each connecting rod 173.

Each connecting rod 173 comprises fixing devices 175 for fixing to the interface plate 50. The fixing devices 175 can comprise a first fixing element 176 and a second fixing element 177 that engage through holes obtained in the interface plate 50.

The first fixing element 176 supports the at least one L-shaped lever 174, whereas the second fixing element 177 supports the column 169 and the plate 181.

The tilt adjusting means 172 are sized in such a manner that the rotation of the column 169 and of the platform 170 is the same.

Each L-shaped lever 174 has a larger side connected to the platform 170 and a lesser side connected to a first end of the connecting rod 173. To a second end of the connecting rod 173 the plate 181 is on the other hand connected that is integral with the pin of the column 169.

The tilt adjusting means 172 further comprises an adjusting device 178, similar to the traction and adjusting element 66, for example a screw tie rod, connected on one side to the column 169 and on the other to the interface plate 50 by a fixing member 179 provided with a shaft 180 around which the adjusting device 178 is rotatable. The adjusting device 178 comprises adjusting elements, such as for example screws, that, once driven, lengthen or shorten the length of the adjusting device 178. In this manner it is possible to adjust the tilt of the column 169 and of the platform 170 so that they are substantially perpendicular to the ground 5 and substantially parallel to the ground 5, respectively, regardless of the tilt of the loading ramp 9.

In use, a tilt variation imposed by the adjusting device 178 is translated into a tilt variation of the column 169 and, by each connecting rod 173 and each L-shaped lever 174 in a tilt variation of the platform 170. In this manner it is possible to adjust the tilt of the components of the saddle 162.

With reference to Figures 38 and 40, the saddle 162 further comprises a pair of still further telescopic guides 184 connected to the column 169 and arranged for enabling a movement of the base 163 in a longitudinal translation direction that is substantially orthogonal to the column 169 in order to cantilever the base 163 on the access zone 6 of the transporting vehicle so as to bring the saddle 162 near a seat fitted to the transporting vehicle.

With reference to Figures 39 to 42, a sequence is illustrated of an ascent procedure for lifting the saddle 162 to the transporting vehicle. In the Figures the saddle 162 supports a person 110 to take the person 110 to the access zone 6 of the transporting vehicle, nevertheless, it is also provided for the saddle 162 to be taken to the transporting vehicle without a passenger, in order to load a passenger and then take the passenger to the ground 5.

When a person 110, for example with a medium disability, has to be transported from the ground 5 to the access zone 6, the transporting apparatus 1 is fitted to the stairs 2 and the saddle 162 is fitted to the interface plate 50 by the fixing devices 175. After which the tilt of the column 169 and of the platform 170 is adjusted by the tilt adjusting means 172.

The ascent procedure then comprises fitting the handlebar 164 and the back 167 into the suitable hooking seats. In particular, the back 167 can be fitted facing the transporting vehicle or the ground 5 depending on whether the person 110 wants to be transported with the face facing the stairs 2 or with the back of the body facing the stairs 2.

The handlebar 164 and/or back 167 can be fitted after the person 110 has been positioned on the saddle 162.

Thereafter, the person 110 sits on the saddle 162, resting the back of the body of the person on the back 167, the feet on the platform 170 and grasping with the hands the grip 166 (Figure 39). The belt 171, if it is present, can be hooked around the waist of the person 110.

The ascent procedure then comprises driving the dragging carriage 12 on the loading ramp 9 along an ascent direction T shown with an arrow in Figure 39, until the supporting device 200 reaches near the tread 16 of the step 8, i.e. reaches near the access zone 6 of the transporting vehicle.

At this point the person 110 can be taken to the access zone 6, approaching a seat of the transporting vehicle by possibly translating in a cantilevered manner the saddle 162 by the still further telescopic guides 184, unhooking the belt 171 and removing the back 167 to promote the descent from the saddle 162 (Figure 40).

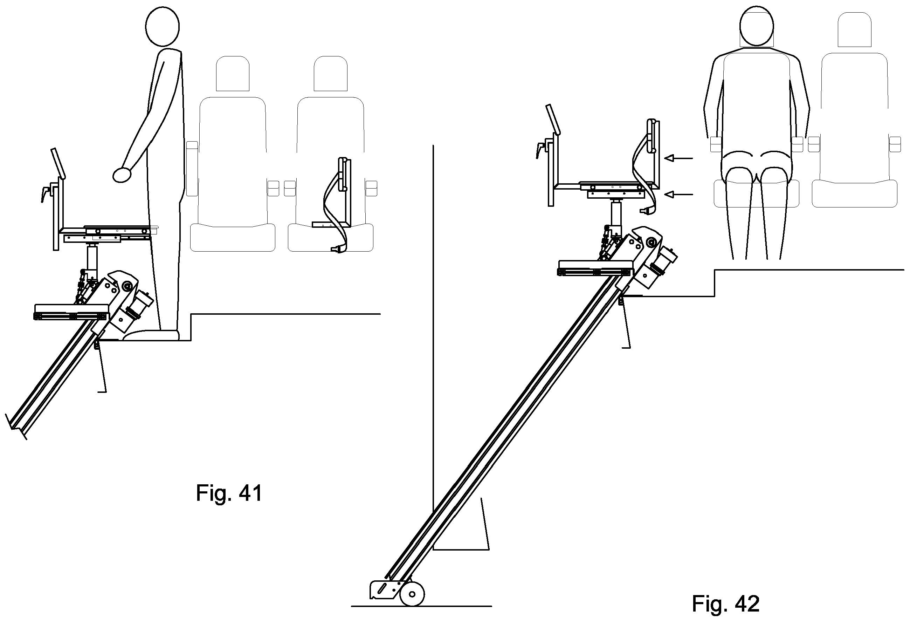

The person 110 can then move to reach a seat of the transporting vehicle, for example a seat placed opposite the access space 3, (Figure 41) and the back 167 can be reinserted on the base 163 (Figure 42). Possibly, the seat can be translated in a cantilevered manner by the further telescopic guides 105.

The supporting device 200 can then be moved to the ground 5 to transport a further person 110.

A descent procedure comprises the steps of the ascent procedure shown in Figures 39 to 42 where on the saddle 162 no person 110 is arranged. The person 110 will be loaded onto the saddle 162 when the latter reaches near the access zone 6 of the transporting vehicle once the back 167 has been removed.

The back 167 will then be reinserted once the person 110 has sat down on the saddle 162. Once the back 167 has been inserted, the belt 171 can be hooked if it is present and the saddle 162 can be moved along the descent direction H, substantially opposite the ascent direction T, until it reaches near the ground 5.

At this point the person 110 can go to the ground 5, unhooking the belt 171 and possibly removing the back 167 to promote the descent from the saddle 162.

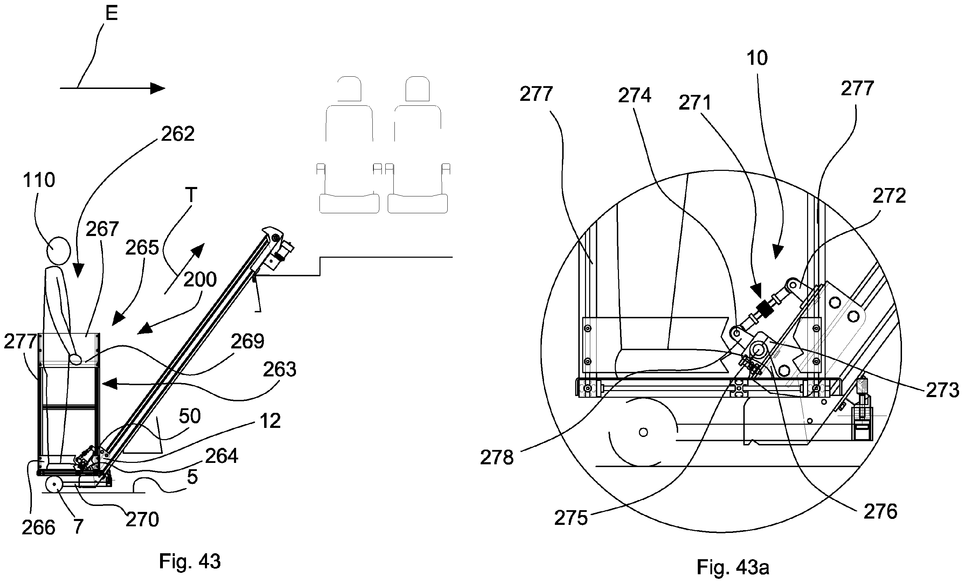

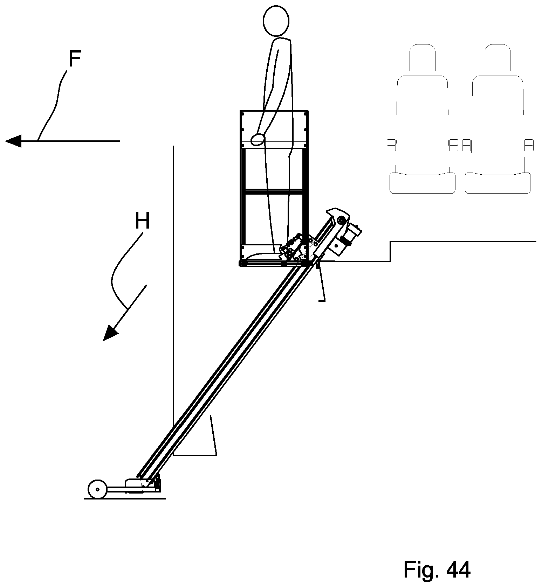

Also, alternatively to the seat 62 and to the saddle 162, the supporting device 200 that is hookable to the interface plate 50 for supporting a person to be lifted or lowered can comprise a lifting platform 262, shown in Figures 43, 43a and 44, on which a person with a slight disability who is to be transported, is arranged standing up.

The platform 262 comprises a cage frame 263 that is open towards the top and arranged for supporting the person 110 to be transported. The cage frame 263 is provided with a resting bottom 264 arranged substantially parallel to the ground 5 to receive restingly the person 110 to be transported located standing up and with protective panels 265 arranged laterally in the cage frame 263, i.e. in use not facing the transporting vehicle, to protect the limbs of the person 110 to be transported from knocking against elements of the access space 3 and of the access zone 6 of the transporting vehicle.

The protective panels 265 comprise at least a pair of protective panels for lower limbs 266, arranged opposite and substantially perpendicular to and near the resting bottom 264 and a pair of protective panels for upper limbs 267 arranged opposite and substantially perpendicular to the resting bottom 264. The pair of protective panels for upper limbs 267 can be arranged at a height substantially corresponding to a lombar zone of the person 110. The cage frame 263 further comprises uprights 277 substantially perpendicular to the resting bottom 264 to which the protective panels 265 are connected. Between pairs of uprights 277 of the same side, at the respective protective panel facing the centre of the platform, a crosspiece 269 can be fitted that is adjustable in height and arranged substantially parallel to the resting bottom 264 that the person 110 to be transported can grip to improve personal stability during an ascent from the ground 5 to the transporting vehicle or during a descent from the transporting vehicle to the ground 5.

The platform 262 can further comprise, a seat element, not shown in the Figures, anchored on the resting bottom 264 to enable the person 110 to be able to sit on the seat element during the ascent or the descent of the platform 262 along the loading ramp 9.

When the use of the platform 262 is envisaged, the transporting apparatus 1 can comprise a removable extendible arm 270 arranged for removing the wheel or wheels 7 from the loading ramp 9 by a distance that depends on the maximum load that the platform 262 can transport, so as to support in a more stable manner the platform 262. The removable arm 270 is connected on one side to the wheel 7 and on the other to an axle, not illustrated, connected to the loading ramp 9.

With reference in particular to Figure 43a that shows an enlarged detail of the Figure 43, the platform 262 is connected to the interface plate 50 by the connecting means 10 that comprises a tilt adjusting element 271, arranged for adjusting a tilt of the resting bottom 264 of the platform 262.

The tilt adjusting element 271 is similar to the adjusting device 178 and to the traction and adjusting element 66 and can be for example a screw tie rod, connected to the interface plate 50 on one side by a first fixing member 272 and on the other by a second fixing member 273. The tilt adjusting element 271 comprises adjusting elements, such as for example screws, that, once driven, lengthen or shorten the length of the tilt adjusting element 271. In this manner it is possible to adjust the tilt of the resting bottom 264 so that it is arranged substantially parallel to the ground 5, regardless of the tilt of the loading ramp 9.

The second fixing member 273 is provided with a first shaft 275 to which at least one L-shaped plate 276 is fixed, which is completely similar to the L-shaped lever 174 and is fixed to the resting bottom 264 to orient the platform 262, and with a rod 278 provided with a hinge 274 around which an end of the tilt adjusting element 271 is rotatable.

Two L-shaped plates 276 can be provided to be fixed to the resting bottom 264.

Each L-shaped plate 276 has a larger side connected to the resting bottom 264 and a smaller side hinged on the first shaft 275. In this manner, in use, a tilt variation imposed by the tilt adjusting element 271 is translated by the L-shaped plate 276 into a tilt variation of the resting bottom 264 and, consequently, of the platform 262. Simultaneously, owing to the uprights 277, the tilt variation imposed by the tilt adjusting element 271 is translated into a tilt variation also of the protective panels 265.

With reference to Figure 43, there is illustrated a start position of the platform 262 arranged for ascending from a zone near the ground 5 to the transporting vehicle. In Figure 43 the platform 262 supports a person 110 to take the person 110 to the access zone 6 of the transporting vehicle, nevertheless, it is also provided for the platform 262 to be taken to the transporting vehicle without a passenger, in order to load a passenger and then take the passenger to the ground 5.

When a person 110 for example with a slight disability has to be transported from the ground 5 to the access zone 6, the transporting apparatus 1 is fitted to the stairs 2 and the platform 262 is fitted to the interface plate 50 by the first fixing member 272 and e second fixing member 273. After this, the tilt of the resting bottom 264 is adjusted by acting on the tilt adjusting element 271.

At this point the person 110 is introduced into the platform 262, passing from one of the sides of the cage frame 263 that do not have protective panels 265 i.e. are devoid of obstacles to the passage of the person 110. If the seat element is present, the person may transit the loading ramp 9 resting on the seat element.

The ascent procedure then comprises driving the dragging carriage 12 on the loading ramp 9 along the ascent direction T shown with an arrow in Figure 43, until the supporting device 200 reaches near the tread 16 of the step 8, i.e. reaches near the access zone 6 of the transporting vehicle.

During the ascent step the hands of the person 110 can grip the crosspieces 269.

At this point the person 110 can go to the access zone 6 leaving the platform 262 along the entry direction E. The person 110 can then walk to reach a seat of the transporting vehicle, for example a seat placed opposite the access space 3.

Alternatively, the person 110 can sit on a seat, for example an extractable seat 62, taken in a cantilevered manner to the aisle of the access zone 6 owing to the further telescopic guides 105 of the further movable frame 78 that, as disclosed previously, are extended to take the seat to the removing position after which the further locking element 106 is taken to the disinsertion position M. In this manner, the person 110 may not have to use the lower limbs to reach the seat of the transporting vehicle. After being extended, the further telescopic guides 105 can be retracted so that the seat reaches the journey position and the further locking element 106 is taken to the insertion position N.

The supporting device 200 can then be moved to the ground 5 to transport a further person 110.

With reference to Figure 44, there is illustrated a start position of the platform 262 arranged for descending from the transporting vehicle to the ground 5.

A descent procedure comprises the steps of the ascent procedure shown in Figure 43 where on the platform 262 no person 110 is arranged. The person 110 will be loaded by following the exit direction F on the platform 262 when the latter reaches near the access zone 6 of the transporting vehicle.

In order to facilitate access of the person 110 to the platform 262, it is possible to take in a cantilevered manner the seat of the transport vehicle to the aisle of the access zone 6 by extending the further telescopic guides 105 once the further locking element 106 has been placed in the disinsertion position M. In this manner, the person 110 does not have to walk from the journey position to the platform 262, but is taken to the latter owing to the further movable frame 78 of the transporting vehicle.

Once the person 110 is arranged on the resting bottom 264, or on the seat element, the platform 262 can be moved along the descent direction H, until, substantially opposite the ascent direction T, it reaches near the ground 5.

At this point the person 110 can go to the ground 5 by exiting the platform 262 along the exit direction F to land on the ground 5.

The transporting apparatus 1 according to the invention, with which a supporting device 200 can be associated, can be fitted to and dismantled from the transporting vehicle very rapidly owing to the fixing means 13 that is fixed rapidly to the step 8 of the stairs 2 of the transporting vehicle, possibly without making any structural modification to the transporting vehicle.

In addition, owing to the configuration of the fixing means 13 and, in particular, the abutting means 19, the transporting apparatus 1 can be fitted to different access spaces 3 associated with different transport vehicles. In fact, the abutting means 19 adapts to access spaces of different width and is suitable for abutting also on walls that are not perfectly flat. Consequently, as the transporting apparatus 1 is suitable for being used in different transport vehicles, it is not necessary to use a transporting apparatus 1 for each transporting vehicle.

The transporting apparatus 1, when it is not in use can be easily placed in the boot of the transporting vehicle. In one version, the fixing means 13 can also be left fitted to the step 8 because it has minimal overall dimensions, this accelerating a subsequent step of fitting the transporting apparatus 1 to the transporting vehicle.

The person 110 is transported through an access space 3 of the transporting vehicle, leaving substantially unaltered the structure of the transporting vehicle and the geometry of the steps of the stairs 2.

Also, owing to the interface plate 50, it is possible to fit onto and dismantle from the transporting apparatus 1 the various supporting devices 200 very rapidly and without the help of additional tools like spanners or screwdrivers.

Advantageously, by using the seat 62 that is extractable from the transporting vehicle it is possible to transport a person 110 with severe disability, i.e. in a wheelchair, without using the latter and thus without having to provide a parking area for the wheelchair on board the transporting vehicle obtained by overturning or temporarily removing one or more seats. In this manner the total number of passenger seats on the transporting vehicle is safeguarded. If the seat 62 is used, the only modifications to be made to the frame of the transporting vehicle are the provision of the further movable frame 79 and of the further telescopic guides 105, which do not nevertheless alter the structure of the transporting vehicle, are rather cheap and easy to fit and could be used for easily extending any seat provided in the transporting vehicle.

## Claims

1. Transporting apparatus (1) for transporting a disabled person or a person with reduced mobility which is suitable for transporting a person (110) between ground (5) and an access zone (6) of a transporting vehicle through an access space (3) of the transporting vehicle, said transporting apparatus (1) comprising removing means (4) arranged for enabling said person (110) to overcome a difference in level between said ground (5) and said access zone (6), said removing means (4) comprising a loading ramp (9) and a dragging carriage (12) connected to said loading ramp (9) to be dragged to slide thereupon, said transporting apparatus (1) further comprising fixing means (13) arranged for fixing said loading ramp (9) to a step (8) of stairs (2) of said access space (3) and a supporting device (200) arranged for supporting said disabled person or person with reduced mobility (110) and connected to said dragging carriage (12) by connecting means (10), said supporting device (200) comprises a seat (62) and a supporting structure (67) connected to said connecting means (10) and arranged for supporting said seat (62), **characterised in that** said seat (62) being made to slide on said supporting structure (67) and being detachable from said supporting structure (67) and couplable with a further supporting structure on said transporting vehicle.

2. Transporting apparatus (1) according to claim 1, wherein said supporting structure (67) comprises a movable frame (76) and a fixed frame (77), that are reciprocally coupled by telescopic guides (84) that permit a translation of said movable frame (76) inside said fixed frame (77), said movable frame (76) comprising a pair of side guides (79) arranged for supporting said seat (62) in translation and in rest.

3. Transporting apparatus (1) according to claim 2, wherein said movable frame (76) further comprises at least one safety stop (100) arranged for locking a longitudinal movement of said seat (62) when the latter is placed on said supporting structure (67).

4. Transporting apparatus (1) according to claim 2 or 3, wherein said fixed frame (77) comprises a U-shaped support (83) that supports said telescopic guides (84) in turn connected to said movable frame (76) to enable said movable frame (76) to move in a longitudinal translation direction that is substantially parallel to said side guides (79) in order to bring a head of said side guides (79) near a head of said further supporting structure.

5. Transporting apparatus (1) according to claim 4, wherein said fixed frame (77) further comprises a lateral adjusting device (85) arranged for adjusting a lateral position of said movable frame (76) moving the latter along a lateral translation direction substantially orthogonal to said longitudinal translation direction, so as to align said head of said side guides (79) on said head of said further supporting structure.

6. Transporting apparatus (1) according to any preceding claim, wherein said further supporting structure of said transporting vehicle comprises a further movable frame (78) and a further fixed frame (104), reciprocally coupled by further telescopic guides (105) that permit a translation of said further movable frame (78) inside said further fixed frame (104), said further movable frame (78) comprising a pair of further side guides (82) arranged for supporting in translation and in rest said seat (62).

7. Transporting apparatus (1) according to claim 6, wherein said further telescopic guides (105) are arranged to enable said seat (62) to move in a translation direction substantially orthogonal to a travel direction of said transporting vehicle in order to bring a head of said further side guides (82) near said head of said side guides (79).

8. Transporting apparatus (1) according to claim 6 or 7, wherein one or each side guide (79) comprises a point (80) arranged for inserting in a portion of said further movable frame (78) of said transporting vehicle to lower a limit stop (81) to create a continuity between said side guides (79) and said further side guides (82) of said further movable frame (78) to enable said seat (62) to be moved from said supporting structure (67) to said further supporting structure, and vice versa.

9. Transporting apparatus (1) according to claim 8, wherein one or each side guide (79) further comprises a hooking element (111) rotatable around the pivot thereof, and shaped so as to hook a stem of said limit stop (81) maintaining said continuity between said side guides (79) and said further side guides (82).

10. Transporting apparatus (1) according to any one of claims 6 to 9, wherein said seat (62) comprises a first locking element (91) arranged for locking said seat (62) with respect to said movable frame (76) or to said further movable frame (78), according to whether said seat (62) is arranged on said supporting structure (67) or on said further supporting structure.

11. Transporting apparatus (1) according to claim 10, wherein said first locking element (91) comprises two locking pins (92) driven to move between a locked position (B), in which said seat (62) is locked to said movable frame (76) or to said further movable frame (78), and an unlocked position (L), in which said seat (62) is unlocked from said movable frame (76) or from said further movable frame (78) and is free to move with respect to said movable frame (76) or to said further movable frame (78), once said safety stop (100) or said limit stop (81) has been lowered.

12. Transporting apparatus (1) according to any preceding claim, wherein said seat (62) comprises a sitting place (72) and a fifth wheel (68) connected to a lower face of said sitting place (72), said fifth wheel (68) being provided with a plurality of ball supports (69) that enable said seat (62) to rotate around its rotation axis (S) passing through the centre of said fifth wheel (68).

13. Transporting apparatus (1) according to claim 12, wherein said seat (62) further comprises a second locking element (95) arranged for locking a rotation of said fifth wheel (68) around said rotation axis (S), said second locking element (95) being drivable by rotation of a control rod (96) connected to a fork (97) arranged for moving a fixing pin (98) that is fixable on said fifth wheel (68) between a fixing position (C) in which said fixing pin (98) engages a fixing seat (99) obtained in said fifth wheel (68) locking a rotational movement of said fifth wheel (68), and a release position (U) in which said fixing pin (98) is removed from said fixing seat (99) by unlocking said fifth wheel (68).

14. Transporting apparatus (1) according to any one of claims 6 to 13, as claim 12 is appended to any one of claims 6 to 11, wherein said further supporting structure comprises a further locking element (106) fixed to said further fixed frame (104) and arranged for locking reciprocally said further movable frame (78) and said further fixed frame (104) when said seat (62) is placed on said transporting vehicle.

15. Transporting apparatus (1) according to claim 14, wherein said further locking element (106) comprises two insertion pins (107) driven to move, by means of a cam (108) driven by a further lever (109), between an insertion position (N), in which said insertion pins (107) engage respective seats obtained in said further movable frame (78) such that said further movable frame (78) is locked in translation, and a disinsertion position (M), in which said two insertion pins (107) move away from said respective seats, disconnecting said further movable frame (78) from said further fixed frame (104) such that said further movable frame (78) can be translated by said further telescopic guides (105) inside said further fixed frame (104).

16. Transporting apparatus (1) according to any one of claims 6 to 15, as claim 12 is appended to any one of claims 6 to 11, wherein said seat (62) further comprises a supporting base (86) arranged for enabling said seat (62) to couple with said further side guides (82) of said further movable frame (78) and with said side guides (79) of said movable frame (76).

17. Transporting apparatus (1) according to claim 16, wherein said supporting base (86) is connected to said fifth wheel (68) by a connecting pin (87).

18. Transporting apparatus (1) according to claim 16 or 17, wherein said supporting base (86) comprises a supporting slab (88) having an upturned C section and a substantially rectangular plan shape.

19. Transporting apparatus (1) according to any one of claims 16 to 18, wherein said supporting base (86) further comprises a plurality of sliding elements (89), each sliding element (89) being shaped so as to be inserted into said side guides (79) and into said further side guides (82) against which it engages to prevent a lateral and/or upward movement of said seat (62) when the latter is slid inside said further side guides (82) or of said side guides (79).

20. Transporting apparatus (1) according to any one of claims 16 to 19, wherein said supporting base (86) further comprises a plurality of rotating bearings (90), each rotating bearing (90) being shaped so as to support a translation of said seat (62) inside said side guides (79) and said further side guides (82).

21. Transporting apparatus (1) according to any one of claims 2 to 20, wherein said connecting means (10) comprises an upright (64) that is telescopic and articulated on a fixing element (65), suitable for fixing said supporting structure (67) to an interface plate (50), and fixed to said fixed frame (77), said upright (64) being mounted substantially perpendicularly to said supporting structure (67).

## Patentansprüche

1. Transportvorrichtung (1) zum Transportieren einer behinderten Person oder einer Person mit reduzierter Mobilität, welche geeignet ist, eine Person (110) zwischen dem Boden (5) und einem Zugangsbereich (6) eines Transportfahrzeuges durch einen Zugangsraum (3) des Transportfahrzeuges zu transportieren, wobei das Transportfahrzeug (1) ein Entfernungsmittel (4) aufweist, das angeordnet ist, um es der Person (110) zu erlauben, einen Höhenunterschied zwischen dem Boden (5) und der Zugangszone (6) zu überwinden, wobei das Entfernungsmittel (4) eine Laderampe (9) und einen Zugwagen (12) aufweist, der mit der Laderampe (9) verbunden ist, um durch Ziehen darauf verschoben zu werden, wobei die Transportvorrichtung (1) ferner ein Fixiermittel (13) aufweist, das angeordnet ist, um die Laderampe (9) an einer Stufe (8) einer Treppe (2) des Zugangsraums (3) zu befestigen, und eine Transportvorrichtung (200) dazu angeordnet ist, die behinderte Person oder die Person mit reduzierter Mobilität (110) zu unterstützen und die mit dem Zugwagen (12) mittels eines Verbindungsmittels (10) verbunden ist, wobei die Stützeinrichtung (200) einen Sitz (62) und eine Stützstruktur (67) aufweist, die mit dem Verbindungsmittel (10) verbunden ist und angeordnet ist, den Sitz (62) zu unterstützen, **dadurch gekennzeichnet, dass** der Sitz (62) dazu ausgebildet ist, auf der Stützstruktur (67) verschiebbar zu sein und von der Stützstruktur (67) lösbar zu sein und mit einer weiteren Stützstruktur des Transportfahrzeugs koppelbar zu sein.

2. Transportvorrichtung (1) nach Anspruch 1, bei welcher die Stützstruktur (67) einen beweglichen Rahmen (76) und einen festen Rahmen (77) aufweist, die reziprok mittels teleskopischer Führungen (84) gekoppelt sind, die eine Translation des beweglichen Rahmens (76) innerhalb des festen Rahmens (77) erlauben, wobei der bewegliche Rahmen (76) ein Paar von Seitenführungen (79) aufweist, die angeordnet sind, um den Sitz (62) während der Translation und in der Ruhelage zu unterstützen.

3. Transportvorrichtung (1) nach Anspruch 2, bei welcher der bewegliche Rahmen (76) ferner wenigstens einen Sicherheitsanschlag (100) aufweist, der dazu angeordnet ist, eine Längsbewegung des Sitzes (62) zu blockieren, wenn der Letztere auf die Stützstruktur (67) aufgesetzt wird.

4. Transportvorrichtung (1) nach Anspruch 2 oder 3, bei welcher der feste Rahmen (77) eine U-förmige Stütze (83) aufweist, die die Teleskopführungen (84) unterstützt, die ihrerseits mit dem beweglichen Rahmen (76) verbunden sind, um es zu erlauben, dass sich der bewegliche Rahmen (76) in einer Längsübertragungsrichtung bewegt, die im Wesentlichen parallel zu den Seitenführungen (79) ist, um einen Kopf der Seitenführungen (79) in die Nähe eines Kopfes der weiteren Stützstruktur zu bringen.

5. Transportvorrichtung (1) nach Anspruch 4, bei welcher der feste Rahmen (77) ferner eine Quereinstelleinrichtung (85) aufweist, die dazu angeordnet ist, eine Querposition des beweglichen Rahmens (76) einzustellen, indem der Letztere entlang einer Querübertragungsrichtung im Wesentlichen senkrecht zu der Längsübertragungsrichtung bewegt wird, um so den Kopf der Seitenführungen (79) auf den Kopf der weiteren Stützstruktur auszurichten.

6. Transportvorrichtung (1) nach irgendeinem vorhergehenden Anspruch, bei welcher die weitere Stützstruktur des Transportfahrzeuges ferner einen weiteren beweglichen Rahmen (78) aufweist, sowie einen weiteren festen Rahmen (104), die reziprok mittels weiterer Teleskopführungen (105) gekoppelt sind, die eine Bewegung des weiteren beweglichen Rahmens (78) innerhalb des weiteren festen Rahmens (104) erlauben, wobei der weitere bewegliche Rahmen (78) ein Paar von weiteren Seitenführungen (82) aufweist, die angeordnet sind, um den Sitz (62) während der Bewegung und in Ruhelage zu unterstützen.

7. Transportvorrichtung (1) nach Anspruch 6, bei welcher die weiteren Teleskopführungen (105) dazu angeordnet sind, es dem Sitz (62) zu erlauben, sich in einer Translationsrichtung im Wesentlichen senkrecht zu einer Bewegungsrichtung des Transportfahrzeugs zu bewegen, um einen Kopf der weiteren Seitenführungen (82) in die Nähe des Kopfes der Seitenführungen (79) zu bringen.

8. Transportvorrichtung (1) nach Anspruch 6 oder 7, bei welcher eine der beiden Seitenführungen (79) einen Punkt (80) aufweist, der angeordnet ist, in einen Teil des weiteren beweglichen Rahmens (78) des Transportfahrzeugs eingeführt zu werden, um einen Stoppanschlag (81) zu erniedrigen, um einen Übergang zwischen den Seitenführungen (79) und den weiteren Seitenführungen (82) des weiteren beweglichen Rahmens (78) zu erzeugen, um es zu ermöglichen, dass der Sitz (62) von der Stützstruktur (67) zu der weiteren Stützstruktur bewegt wird, und umgekehrt.

9. Transportvorrichtung (1) nach Anspruch 8, bei welcher die eine oder jede Seitenführung (79) ferner ein Hakenelement (111) aufweist, das um die Schwenkachse derselben drehbar ist, und das dazu ausgebildet ist, einen Stil des Anschlagstopps (81) innerhalb des Übergangs zwischen den Seitenführungen (79) und der weiteren Seitenführung (82) zu halten.

10. Transportvorrichtung (1) nach irgendeinem der Ansprüche 6 bis 9, bei welcher der Sitz (62) ein erstes Verriegelungselement (91) aufweist, das angeordnet ist, um den Sitz (62) in Bezug auf den beweglichen Rahmen (76) oder den weiteren beweglichen Rahmen (78) zu verriegeln, abhängig davon, ob der Sitz (62) auf der Stützstruktur (67) oder auf der weiteren Stützstruktur angeordnet ist.

11. Transportvorrichtung (1) nach Anspruch 10, bei welcher das erste Verriegelungselement (91) zwei Verriegelungsstifte (92) aufweist, die angetrieben sind, sich zwischen einer verriegelten Position (B), in welcher der Sitz (62) mit dem beweglichen Rahmen (76) oder mit dem weiteren beweglichen Rahmen (78) verriegelt ist, und einer entriegelten Position (L) zu bewegen, in welcher der Sitz (62) von dem beweglichen Rahmen (76) oder von dem weiteren beweglichen Rahmen (78) entriegelt ist und frei ist, sich in Bezug auf den beweglichen Rahmen (76) oder auf den weiteren beweglichen Rahmen (78) zu bewegen, wenn der Sicherungsanschlag (100) oder der Anschlagstopp (81) abgesenkt wurden.

12. Transportvorrichtung (1) nach irgendeinem vorhergehenden Anspruch, bei welcher der Sitz (62) einen Sitzplatz (72) aufweist und ein fünftes Rad (68) mit einer unteren Fläche des Sitzplatzes (72) verbunden ist, wobei das fünfte Rad (68) mit einer Mehrzahl von Kugelunterstützungen (69) versehen ist, die es erlauben, dass sich der Sitz (62) um seine Drehachse (S) dreht, die durch die Mitte des fünften Rads (68) verläuft.

13. Transportvorrichtung (1) nach Anspruch 12, bei welcher der Sitz (62) ferner ein zweites Verriegelungselement (95) aufweist, das angeordnet ist, um eine Drehung des fünften Rades (68) um die Drehachse (S) zu verriegeln, wobei das zweite Verriegelungselement (95) durch Drehen eines Steuerstabes (96) antreibbar ist, der mit einer Gabel (97) verbunden ist, die angeordnet ist, um einen Fixierstift (98) zu bewegen, der an dem fünften Rad (68) zwischen einer Fixierposition (C), in welcher der Fixierstift (98) an einem Fixiersitz (99) angreift, der an dem fünften Rad (68) vorgesehen ist, um eine Drehbewegung des fünften Rades (68) zu blockieren, und einer Freigabeposition (U) bewegbar ist, in welcher der Fixierstift (98) von dem Fixiersitz (99) durch Entriegeln des fünften Rades (68) entfernt ist.

14. Transportvorrichtung (1) nach irgendeinem der Ansprüche 6 bis 13, soweit Anspruch 12 von irgendeinem der Ansprüche 6 bis 11 abhängig ist, wobei die weitere Stützstruktur ein weiteres Verriegelungselement (106) aufweist, das an dem weiteren Fixierrahmen (104) befestigt ist und dazu angeordnet ist, den weiteren beweglichen Rahmen (78) und den weiteren feste Rahmen (104) reziprok zu verriegeln, wenn der Sitz (62) auf dem Transportfahrzeug platziert ist.

15. Transportvorrichtung (1) nach Anspruch 14, bei welcher das weitere Verriegelungselement (106) zwei Einsteckstifte (107) aufweist, die angetrieben sind, um mithilfe eines durch einen weiteren Hebel (109) angetriebenen Nockens (108) sich zwischen einer Einführposition (N), in welcher die Einführstifte (107) an entsprechenden Sitzen angreifen, die an dem weiteren beweglichen Rahmen (78) angeordnet sind, so dass der weitere bewegliche Rahmen (78) in Längsrichtung verriegelt ist, und einer Ausführposition (M) zu bewegen, in welcher sich die beiden Einführstifte (107) von den betreffenden Sitzen weg bewegen, wodurch der weitere bewegliche Rahmen (78) von dem weiteren festen Rahmen (104) gelöst wird, so dass der weitere bewegliche Rahmen (78) mittels der weiteren Teleskopführungen (105) innerhalb des weiteren beweglichen Rahmens (104) verschoben werden kann.

16. Transportvorrichtung (1) nach irgendeinem der Ansprüche 6 bis 15, soweit Anspruch 12 von irgendeinem der Ansprüche 6 bis 11 abhängig ist, bei welcher der Sitz (62) ferner eine Stützbasis (86) aufweist, die angeordnet ist, es dem Sitz (62) zu erlauben, mit den weiteren Seitenführungen (82) des weiteren beweglichen Rahmens (78) und mit den Seitenführungen (79) des beweglichen Rahmens (76) gekoppelt zu werden.

17. Transportvorrichtung (1) nach Anspruch 16, bei welcher die Stützbasis (86) mit dem fünften Rad (68) mittels eines Verbindungsstiftes (87) verbunden ist.

18. Transportvorrichtung (1) nach Anspruch 16 oder 17, bei welcher die Stützbasis (86) eine stützende Platte (88) mit einem nach oben weisenden C-Abschnitt sowie mit einer im Wesentlichen rechteckförmigen ebenen Form aufweist.

19. Transportvorrichtung (1) nach irgendeinem der Ansprüche 16 bis 18, bei welcher die Stützbasis (86) ferner eine Mehrzahl von Schiebeelementen (89) aufweist, wobei jedes Schiebeelement (89) dazu geformt ist, in die Seitenführungen (79) und in die weiteren Seitenführungen (82) eingeführt zu werden und daran anzugreifen, um eine Bewegung des Sitzes (62) in Querrichtung und/oder nach oben zu verhindern, wenn der Letztere innerhalb der weiteren Seitenführungen (82) oder der Seitenführungen (79) verschoben wird.

20. Transportvorrichtung (1) nach irgendeinem der Ansprüche 16 bis 19, bei welcher die Stützbasis (86) ferner eine Mehrzahl von Drehlagern (90) aufweist, wobei jedes Drehlager (90) dazu ausgebildet ist, eine Translation des Sitzes (62) innerhalb der Seitenführungen (79) und der weiteren Seitenführungen (82) zu unterstützen.

21. Transportvorrichtung (1) nach irgendeinem der Ansprüche 2 bis 20, bei welcher das Verbindungsmittel (10) einen Pfosten (64) aufweist, der teleskopisch ist und auf einem Fixierelement (65) gelenkig angeordnet ist, der dazu geeignet ist, die Stützstruktur (67) an einer Zwischenplatte (50) festzulegen, und an dem festen Rahmen (77) befestigt ist, wobei der Pfosten (64) im Wesentlichen senkrecht zu der Stützstruktur (67) befestigt ist.

## Revendications

1. Appareil de transport (1) pour transporter une personne handicapée ou une personne à mobilité réduite qui est adapté pour transporter une personne (110) entre le sol (5) et une zone d'accès (6) d'un véhicule de transport par un espace d'accès (3) du véhicule de transport, ledit appareil de transport (1) comprenant des moyens d'évacuation (4) agencés pour permettre à ladite personne (110) de surmonter une différence de niveau entre ledit sol (5) et ladite zone d'accès (6), lesdits moyens d'évacuation (4) comprenant une rampe de chargement (9) et un chariot de traînage (12) relié à ladite rampe de chargement (9) pour être traîné pour glisser sur celle-ci, ledit appareil de transport (1) comprenant en outre des moyens de fixation (13) agencés pour fixer ladite rampe de chargement (9) à une marche (8) d'un escalier (2) dudit espace d'accès (3) et un dispositif de support (200) agencé pour supporter ladite personne handicapée ou personne à mobilité réduite (110) et relié audit chariot de traînage (12) par des moyens de liaison (10), ledit dispositif de support (200) comprend un siège (62) et une structure de support (67) reliée auxdits moyens de liaison (10) et agencée pour supporter ledit siège (62),
**caractérisé en ce que** ledit siège (62) est fait pour glisser sur ladite structure de support (67) et est détachable de ladite structure de support (67) et est couplable à une structure de support supplémentaire sur ledit véhicule de transport.

2. Appareil de transport (1) selon la revendication 1, dans lequel ladite structure de support (67) comprend un châssis mobile (76) et un châssis fixe (77), qui sont réciproquement couplés par des guides télescopiques (84) qui permettent une translation dudit châssis mobile (76) dans ledit châssis fixe (77), ledit châssis mobile (76) comprenant une paire de guides latéraux (79) agencés pour supporter ledit siège (62) en translation et en repos.

3. Appareil de transport (1) selon la revendication 2, dans lequel ledit châssis mobile (76) comprend en outre au moins une butée de sécurité (100) agencée pour verrouiller un mouvement longitudinal dudit siège (62) lorsque ce dernier est placé sur ladite structure de support (67).

4. Appareil de transport (1) selon la revendication 2 ou 3, dans lequel ledit châssis fixe (77) comprend un support en forme de U (83) qui supporte lesdits guides télescopiques (84) reliés à leur tour audit châssis mobile (76) pour permettre audit châssis mobile (76) de se déplacer dans une direction de translation longitudinale qui est sensiblement parallèle auxdits guides latéraux (79) afin d'amener une tête desdits guides latéraux (79) près d'une tête de ladite structure de support supplémentaire.

5. Appareil de transport (1) selon la revendication 4, dans lequel ledit châssis fixe (77) comprend en outre un dispositif de réglage latéral (85) agencé pour ajuster une position latérale dudit châssis mobile (76) en déplaçant ce dernier le long d'une direction de translation latérale sensiblement orthogonale à ladite direction de translation longitudinale, de manière à aligner ladite tête desdits guides latéraux (79) sur ladite tête de ladite structure de support supplémentaire.

6. Appareil de transport (1) selon l'une quelconque des revendications précédentes, dans lequel ladite structure de support supplémentaire dudit véhicule de transport comprend un châssis mobile supplémentaire (78) et un châssis fixe supplémentaire (104), réciproquement couplés par des guides télescopiques supplémentaires (105) qui permettent une translation dudit châssis mobile supplémentaire (78) dans ledit châssis fixe supplémentaire (104), ledit châssis mobile supplémentaire (78) comprenant une paire de guides latéraux supplémentaires (82) agencés pour supporter ledit siège (62) en translation et en repos.

7. Appareil de transport (1) selon la revendication 6, dans lequel lesdits guides télescopiques supplémentaires (105) sont agencés pour permettre audit siège (62) de se déplacer dans une direction de translation sensiblement orthogonale à une direction de déplacement dudit véhicule de transport afin d'amener une tête desdits guides latéraux supplémentaires (82) près de ladite tête desdits guides latéraux (79).

8. Appareil de transport (1) selon la revendication 6 ou 7, dans lequel un ou chaque guide latéral (79) comprend un point (80) agencé pour être inséré dans une partie dudit châssis mobile supplémentaire (78) dudit véhicule de transport pour abaisser une butée de limite (81) pour créer une continuité entre lesdits guides latéraux (79) et lesdits guides latéraux supplémentaires (82) dudit châssis mobile supplémentaire (78) pour permettre audit siège (62) d'être déplacé de ladite structure de support (67) à ladite structure de support supplémentaire, et vice versa.

9. Appareil de transport (1) selon la revendication 8, dans lequel un ou chaque guide latéral (79) comprend en outre un élément d'accrochage (111) pouvant tourner autour du pivot de celui-ci, et formé de manière à accrocher une tige de ladite butée de limite (81) maintenant ladite continuité entre lesdits guides latéraux (79) et lesdits guides latéraux supplémentaires (82).

10. Appareil de transport (1) selon l'une quelconque des revendications 6 à 9, dans lequel ledit siège (62) comprend un premier élément de verrouillage (91) agencé pour verrouiller ledit siège (62) par rapport audit châssis mobile (76) ou audit châssis mobile supplémentaire (78), en fonction de si ledit siège (62) est agencé sur ladite structure de support (67) ou sur ladite structure de support supplémentaire.

11. Appareil de transport (1) selon la revendication 10, dans lequel ledit premier élément de verrouillage (91) comprend deux goupilles de verrouillage (92) entraînées pour se déplacer entre une position verrouillée (B), dans laquelle ledit siège (62) est verrouillé audit châssis mobile (76) ou audit châssis mobile supplémentaire (78), et une position déverrouillée (L), dans laquelle ledit siège (62) est déverrouillé dudit châssis mobile (76) ou dudit châssis mobile supplémentaire (78) et est libre de se déplacer par rapport audit châssis mobile (76) ou audit châssis mobile supplémentaire (78), une fois que ladite butée de sécurité (100) ou ladite butée de limite (81) a été abaissée.

12. Appareil de transport (1) selon l'une quelconque des revendications précédentes, dans lequel ledit siège (62) comprend une place assise (72) et une cinquième roue (68) reliée à une face inférieure de ladite place assise (72), ladite cinquième roue (68) étant pourvue d'une pluralité de supports à billes (69) qui permettent audit siège (62) de tourner autour de son axe de rotation (S) passant par le centre de ladite cinquième roue (68) .

13. Appareil de transport (1) selon la revendication 12, dans lequel ledit siège (62) comprend en outre un second élément de verrouillage (95) agencé pour verrouiller une rotation de ladite cinquième roue (68) autour dudit axe de rotation (S), ledit second élément de verrouillage (95) pouvant être entraîné par une rotation d'une barre de commande (96) reliée à une fourche (97) agencée pour déplacer une goupille de fixation (98) qui est apte à être fixée sur ladite cinquième roue (68) entre une position de fixation (C) dans laquelle ladite goupille de fixation (98) engage un siège de fixation (99) formé dans ladite cinquième roue (68) verrouillant un mouvement de rotation de ladite cinquième roue (68), et une position de libération (U) dans laquelle ladite goupille de fixation (98) est retirée dudit siège de fixation (99) en déverrouillant ladite cinquième roue (68) .

14. Appareil de transport (1) selon l'une quelconque des revendications 6 à 13, la revendication 12 étant rattachée à l'une quelconque des revendications 6 à 11, dans lequel ladite structure de support supplémentaire comprend un élément de verrouillage supplémentaire (106) fixé audit châssis fixe supplémentaire (104) et agencé pour verrouiller réciproquement ledit châssis mobile supplémentaire (78) et ledit châssis fixe supplémentaire (104) lorsque ledit siège (62) est placé sur ledit véhicule de transport.

15. Appareil de transport (1) selon la revendication 14, dans lequel ledit élément de verrouillage supplémentaire (106) comprend deux goupilles d'insertion (107) entraînées pour se déplacer, au moyen d'une came (108) entraînée par un levier supplémentaire (109), entre une position d'insertion (N), dans laquelle lesdites goupilles d'insertion (107) engagent des sièges respectifs formés dans ledit châssis mobile supplémentaire (78) de telle sorte que ledit châssis mobile supplémentaire (78) est verrouillé en translation, et une position de désinsertion (M), dans laquelle lesdites deux goupilles d'insertion (107) s'écartent desdits sièges respectifs, en séparant ledit châssis mobile supplémentaire (78) dudit châssis fixe supplémentaire (104) de telle sorte que ledit châssis mobile supplémentaire (78) peut être déplacé en translation par lesdits guides télescopiques supplémentaires (105) dans ledit châssis fixe supplémentaire (104) .

16. Appareil de transport (1) selon l'une quelconque des revendications 6 à 15, la revendication 12 étant rattachée à l'une quelconque des revendications 6 à 11, dans lequel ledit siège (62) comprend en outre une base de support (86) agencée pour permettre audit siège (62) d'être couplé auxdits guides latéraux supplémentaires (82) dudit châssis mobile supplémentaire (78) et auxdits guides latéraux (79) dudit châssis mobile (76).

17. Appareil de transport (1) selon la revendication 16, dans lequel ladite base de support (86) est reliée à ladite cinquième roue (68) par une goupille de liaison (87).

18. Appareil de transport (1) selon la revendication 16 ou 17, dans lequel ladite base de support (86) comprend une dalle de support (88) ayant une section en C retourné et une forme plane sensiblement rectangulaire.

19. Appareil de transport (1) selon l'une quelconque des revendications 16 à 18, dans lequel ladite base de support (86) comprend en outre une pluralité d'éléments glissants (89), chaque élément glissant (89) étant formé de manière à être inséré dans lesdits guides latéraux (79) et dans lesdits guides latéraux supplémentaires (82) contre lesquels il s'engage pour empêcher un mouvement latéral et/ou vers le haut dudit siège (62) lorsque ce dernier est glissé dans lesdits guides latéraux supplémentaires (82) ou lesdits guides latéraux (79) .

20. Appareil de transport (1) selon l'une quelconque des revendications 16 à 19, dans lequel ladite base de support (86) comprend en outre une pluralité de paliers tournants (90), chaque palier tournant (90) étant formé de manière à supporter une translation dudit siège (62) dans lesdits guides latéraux (79) et lesdits guides latéraux supplémentaires (82).

21. Appareil de transport (1) selon l'une quelconque des revendications 2 à 20, dans lequel lesdits moyens de liaison (10) comprennent un montant (64) qui est télescopique et articulé sur un élément de fixation (65), adapté pour fixer ladite structure de support (67) à une plaque d'interface (50), et fixé audit châssis fixe (77), ledit montant (64) étant monté de manière sensiblement perpendiculaire à ladite structure de support (67).
